# EUROPÄISCHE PATENTSCHRIFT

(11) **EP 2 342 079 B1**
(45) Veröffentlichungstag und Bekanntmachung des Hinweises auf die Patenterteilung: **20.06.2018**
(21) Anmeldenummer: 09736893.0
(22) Anmeldetag: 08.10.2009
(51) Int. Cl.: B32B 7/12, B32B 23/08, B32B 27/08, B32B 27/10, B32B 27/20, B32B 27/28, B32B 27/30, B32B 27/32, B32B 27/34, B32B 27/36, B65D 30/08, B65D 30/20, B65D 65/40, C08F 210/02

(54) **VERWENDUNG VON VERBUNDFOLIEN ALS VERPACKUNGSMATERIAL FÜR UND VERFAHREN ZUR VERPACKUNG VON OXIDATIONSEMPFINDLICHEN POLYMEREN SOWIE VERPACKUNGSFORMEN DIESE ENTHALTEND**
USE OF COMPOSITE FILMS AS A PACKAGING MATERIAL FOR OXIDATION-SENSITIVE POLYMERS, METHOD FOR PACKAGING OXIDATION-SENSITIVE POLYMERS, AND PACKAGING FORMS CONTAINING SAID COMPOSITE FILMS
UTILISATION DE FILMS COMPOSITES COMME MATÉRIAU D'EMBALLAGE DE POLYMÈRES SENSIBLES À L'OXYDATION, PROCÉDÉ D'EMBALLAGE DE CEUX-CI ET FORMES D'EMBALLAGE LES CONTENANT

(30) Priorität: 04.11.2008 EP 08168298; 16.01.2009 DE 202009000692 U; 09.09.2009 JP 2009006450 U
(43) Veröffentlichungstag der Anmeldung: 13.07.2011
(73) Patentinhaber: BASF SE, 67056 Ludwigshafen am Rhein (DE)
(72) Erfinder: FUSSNEGGER, Bernhard, 67489 Kirrweiler (DE); STRUBE, Karl-Hermann, 67346 Speyer (DE); DIEING, Reinhold, 67346 Speyer (DE)
(74) Vertreter: BASF IP Association
(86) Internationale Anmeldenummer: PCT/EP2009/063090
(87) Internationale Veröffentlichungsnummer: WO 2010/052088

(56) Entgegenhaltungen:
- EP-A- 0 805 177
- US-A1- 2007 259 142
- US-B1- 6 331 333
- Harold C. Beachell ET AL: "Oxidative Degradation of Polyethylene*", JOURNAL OF POLYMER SCIENCE, 1 January 1956 (1956-01-01), pages 113-124, XP055271925, Retrieved from the Internet: URL:http://onlinelibrary.wiley.com/store/1 0.1002/pol.1956.120219710/asset/120219710_ ftp.pdf?v=1&t=io2uu3mk&s=61ebbdaf25ed5ac3b eb5f965f210e36cbaccb668 [retrieved on 2016-05-11]
- "IRGANOX 1010", Polymer Additives, 1 August 1998 (1998-08-01), pages 1-2, XP055271932, Retrieved from the Internet: URL:http://www.polivinilplastik.com/urunle r/i1010.pdf [retrieved on 2016-05-11]
- "ASTM STANDARD D3985-81: STANDARD TEST METHOD FOR OXYGEN GAS TRANSMISSION RATE THROUGH PLASTIC FILM AND SHEETING USING A COULOMETRIC SENSOR", ASTM INTERNATIONAL STANDARD, ASTM INTERNATIONAL, US, 1 January 1990 (1990-01-01), pages 620-625, XP008143710,
- "BESTIMMUNG DER GASDURCHLAESSIGKEIT VOLUMETRISCHES VERFAHREN//TESTING OF PLASTICS FILMS; DETERMINATION OF THE GAS TRANSMISSION RATE; VOLUMETRICAL METHOD", DEUTSCHE NORMEN. DIN NORM,, vol. 53380, no. 1-03, 1 October 1982 (1982-10-01), pages 152-165, XP001246483,

## Beschreibung

Die vorliegende Erfindung betrifft die Verwendung von Verbundfolien auf Basis von Polyvinylalkoholen als Verpackungsmaterial für oxidationsempfindliche Polymere gemäß Anspruch 1. Die vorliegende Erfindung betrifft weiterhin Verpackungsformen enthaltend Füllgut (Gebinde), wobei die Verpackungsformen aus Verbundfolie enthaltend Barriereschichten auf Basis von Polyvinylalkoholen bestehen. Füllgut sind oxidationsempfindliche Polymere sowie gegebenenfalls Schutzgas.
Darüberhinaus betrifft die vorliegende Erfindung Umverpackungen, die die Gebinde enthalten.
Viele oxidationsempfindliche Polymere wie beispielsweise die Polyvinylpyrrolidone, z.B. Homo- und Copolymere des N-Vinylpyrrolidons, werden üblicherweise nach ihrer Polymerisation durch Sprühtrocknung oder Walzentrocknung oder einer anderen Warmlufttrocknung in rieselfähige Pulver überführt. Bei diesen Prozessen bilden sich durch den intensiven Luftkontakt und die Wärme Spuren von Peroxiden, deren Gehalt im Laufe der darauffolgenden Verpackung und Lagerung noch weiter zunimmt. Diese Neigung zur Peroxidbildung kann etwa bei der Verwendung in pharmazeutischen Zubereitungen Probleme bereiten. Vergleichbare Probleme treten auch bei Polyethern oder Polyamiden auf. Weitere oxidative Effekte sind beispielsweise Verfärbungen der Polymeren oder Molekulargewichtsveränderungen.
In den gültigen Pharmakopöen, z.B. Ph. Eur. 6 und JP XIV, ist beispielsweise der Peroxidgehalt für diese Polyvinylpyrrolidone auf maximal 400 ppm limitiert. Durch Trocknung unter Luftausschluss, Lagerung bei tiefen Temperaturen oder die hermetisch dichte Verpackung unter Vakuum oder einem Inertgas kann zwar die Kinetik der Peroxidbildung verlangsamt, nicht aber verhindert werden. Ferner sind diese Verfahren mit einem sehr hohen Aufwand verbunden, so dass die Akzeptanz durch die Verwender gering ist.

Bisher wurde häufig versucht, die oxidationsempfindlichen Polymere chemisch gegen die Peroxidbildung zu stabilisieren.
Die Verwendung von Antioxidantien wie beispielsweise phenolischen Antioxidantien, Ascorbinsäure, Ethoxyquin, Butylhydroxytoluol, Butylhydroxyanisol, Tocopherol oder Nordihydroguajaretsäure (NDGA) zur Verhinderung von unerwünschten oxidativen Prozessen ist allgemein bekannt. Ebenso ist bekannt, dass phenolische Antioxidantien sich aufgrund ihrer mangelnden biologischen Abbaubarkeit nur eingeschränkt eignen (vgl. Römpp-Chemie-Lexikon, 9. Auflage, Georg Thieme Verlag, Stuttgart,1992).

Aus der US 6,331,333 ist bekannt, dass Polyvinylpyrrolidone zur Verhinderung der Peroxid-Bildung bei Lagerung in sauerstoffundurchlässigen Verpackungen in Gegenwart eines Sauerstofffängers gelagert werden. Als Sauerstofffänger werden Ascorbinsäure, Eisenpulver oder Eisensalze verwendet. Sauerstofffänger und Polyvinylpyrrolidon sind dabei räumlich getrennt.

Aus der US 6,498,231 ist bekannt, dass Polyvinylpyrrolidone zur Stabilisierung bei Lagerung mit einem Antioxidans vermischt und unter einer Atmosphäre, die nicht mehr als 50.000 ppm Sauerstoff enthält, gelagert werden. Als Antioxidantien werden beispielsweise phenolische oder bisphenolische Verbindungen, vorzugsweise Thioamid- oder Thioharnstoff-Derivate eingesetzt. Solche Antioxidantien sind aber physiologisch nicht ganz unbedenklich und für die Verwendung der Polymere in pharmazeutischen Zubereitungen gänzlich ungeeignet.

Aus der GB 836,831 ist ein Verfahren zur Stabilisierung von Polyvinylpyrrolidonen gegen Verfärbungen bekannt, bei dem Lösungen der Polymeren mit Schwefeldioxid, schwefliger Säure oder Alkalimetallsulfiten behandelt werden. Es hat sich allerdings gezeigt, dass bei diesem Verfahren nach Lagerung der Peroxid-Aufbau sogar in stärkerem Maße auftritt als bei unbehandelten Polymeren.

In der EP-B 1083 884 ist ein Verfahren zur Stabilisierung von Polyvinylpyrrolidonen gegen Peroxid-Bildung beschrieben, bei dem wässrige Lösungen der Polymeren mit sehr geringen Mengen von Schwermetallen oder mit Peroxide spaltenden Enzymen versetzt werden. Der Einsatz von Schwermetallen ist jedoch wegen möglicher Akkumulierung der Schwermetalle im Körper von Nachteil. Der Einsatz von Enzymen ist vor allem aus Kosten und Stabilitätsgründen nachteilig.

Zudem hat sich auch gerade bei vernetzten Polymeren wie dem Crospovidon eine chemische Stabilisierung aber nicht bewährt.

Eine weitere Möglichkeit, die Autoxidation von oxidationsempfindlichen Polymeren zu unterbinden, ist, die Polymere nach Aufarbeitung in einer sauerstoffundurchlässigen Verpackung aufzubewahren.

In der EP-B 873 130 wird empfohlen, Polyvinylpyrrolidone zur Verhinderung der Peroxid-Bildung unter einer Stickstoffatmosphäre sprühzutrocknen und in luftdichten Behältern aufzubewahren.

Als Verpackungsmaterial für oxidationsempfindliche Stoffe werden auch Verbundfolien aus Polyethylen und Aluminium verwendet. Solche Folien haben zwar grundsätzlich gute Barriereeigenschaften, weil sie im Wesentlichen sauerstoffundurchlässig sind, weisen aber den Nachteil auf, dass bei der Handhabung eine mechanische Verletzung der Barriereschicht praktisch nicht zu vermeiden ist, wodurch die Barriereeigenschaft stark beeinträchtigt werden kann. Schon Mikrorisse genügen, um die Sauerstoffundurchlässigkeit der Folien zu beeinträchtigen.
Aus der JP-A 09-226070, der JP-A 2000-44756, der JP-A 09-216653 oder der JP-A 2002-3609 sind Verbundfolien mit Polyvinylalkohol-Schichten und deren Verwendung zur sauerstoffundurchlässigen Verpackung von Lebensmitteln, Kosmetika, Waschmitteln, Chemikalien oder Treibstoff bekannt.
Aus der WO 2006/015765 sind schlauchförmige mehrschichtige thermoplastische Verbundfolien für die Verpackung von Nahrungsmitteln bekannt.

Aufgabe der Erfindung war es, verbesserte Verpackungsmaterialien für oxidationsempfindliche Polymere mit einer Neigung zur Anreicherung von Peroxiden und Verfahren zur Verwendung der Verpackungsmaterialien zu finden.
Weiterhin war es Aufgabe der Erfindung, verbesserte Lagerungs- und Transportmöglichkeiten für oxidationsempfindliche Polymere, insbesondere für solche mit einer Neigung zur Anreicherung von Peroxiden, zu finden.
Demgemäß wurde die Verwendung von Verbundfolien, enthaltend mindestens eine Barriereschicht auf Basis von Polyvinylalkohol-Copolymeren, als Verpackungsmaterial für oxidationsempfindliche Polymere, gefunden.
Weiterhin wurde ein Verfahren zur Verpackung von oxidationsempfindlichen Polymeren in solchen Verbundfolien gefunden.

Weiterhin gefunden wurden Verpackungsformen enthaltend Füllgut (Gebinde), wobei die Copolymeren aus Ethylen und Vinylalkohol bestehen, und das Füllgut aus oxidationsempfindlichen Polymeren und gegebenenfalls Schutzgas besteht.

Unter oxidationsempfindlichen Polymeren werden erfindungsgemäß (i) Homo- und Copolymere von N-Vinylverbindungen, wasserlösliche und wasserunlöslich vernetzte Homo- und Copolymere von Vinylpyrrolidon, Vinylpyrrolidon-Vinylacetat-Copolymere, Vinylacetat-enthaltende Polyether-Pfropfpolymere, Polyamide oder Polyether, (ii) Mischungen von zwei oder mehre ren dieser Polymeren oder (iii) Mischungen enthaltend eines oder mehrere dieser Polymere verstanden. Polyether können Polyethylenglykole (PEG) mit mittleren Molekulargewichten von 200 bis 35.000 Dalton bzw. die Polyethylenoxide mit mittleren Molekulargewichten von 40.000 bis 10.000.000 Dalton sein. Weiterhin können Polyether der Form aba als Blockcopolymere von Ethylenoxid und Propylenoxid (Poloxamere) oder deren inverse Formen (Meroxapole) der Struktur bab sein, wobei a für eine Polyoxyethlyen Struktur mit einem mittleren Molekulargewicht von 150 Dalton bis 5000 Dalton und b für eine Polyoxypropylenstruktur mit einem mittleren Molkulargewicht von 750 Dalton bis 4500 Dalton steht. Ferner können Polyether auch Poloxamine sein. Poloxamine sind strukturell aus einem Ethylendiamin-Kern zusammengesetzt, dessen Aminogruppen mit Copolymeren aus Polyoxyethylen- und Polyoxypropylen-Blöcken variabler Länge substituiert sind:

[H-(C₂H₄O)*ₐ*-(C₃H₆O)*_{b}*]₂N-CH₂-CH₂-N[(C₃H₆O)*_{b}*-(C₂H₄O)*ₐ*-H]₂

wobei a und b variabel sind und mittlere Molekulargewichte wie oben angegeben umfassen können. Polyether können auch Reaktionsprodukte sein, die durch basenkatalysierte Reaktion von Ethylenoxid mit Fettalkoholen, Fettsäuren oder tierischen oder pflanzlichen Ölen und Fetten erhalten werden. Diese Substanzen sind beispielsweise als Cremophor®- oder Solutol®-Marken im Handel. Ferner können Polyether Verbindungen sein, die im Handel die Typbezeichnungen Tween® 20 bis Tween® 85, z.B. das Polyoxyethylen (20) sorbitan monolaurat, haben oder aber zur Klasse der Span®, Brij® oder Mrij® zugehörig sind.
Ebenso umfasst sind Polyether-haltige Copolymere, die aus polymerisierbaren Polyether-Monomeren und anderen Monomeren polymerisiert wurden. Beispiele für Polyether-haltige Monomere werden etwa als Bisomer®-Typen und als Pluriol® A-Typen angeboten.
Polyether umfassen ebenso Polyether-haltige Pfropfpolymere (auch als Graftpolymere bezeichnet) aus Polyethern und Vinylmonomeren, wie zum Beispiel Vinylacetat (VAc) und - nach dessen Polymerisation - dessen Hydrolyseprodukt Vinylalkohol (VOH), Vinyllactamen wie Vinylpyrrolidon (VP)und Vinylcaprolactam (VCap), Vinylamine wie N-Vinylimidazol (VI), N-Vinylformamid (VFA) und - nach der Polymerisation - dessen Hydrolyseprodukt Vinylamin. Solche Pfropfpolymere aus zum Beispiel Polyethylengklykol und nach der Polymerisation weitgehend zu Vinylakohol verseiftem Vinylacetat sind etwa als Kollicoat IR bekannt. Ebenso sind Pfropfpolymere aus Polyethylenglykol und Vinylpyrrolidon und Vinylimidazol sowie aus Polyethylenglykol und Vinylcaprolactam mit Vinylacetat bekannt.

Bevorzugte Polyether sind insbesondere Polytetrahydrofuran, Pfropfpolymere aus PEG mit VOH, Pfropfpolymere aus PEG mit VP und VAc, Pfropfpolymere aus PEG mit VCap und VAc, Pfropfpolymere aus PEG mit VP und VI, Pfropfpolymere aus PEG mit VCap und VI, Polyethylenglykole, die unter dem Markennamen Jeffamine® vermarkteten Polyoxyalkylenamine, Poloxamere®, Cremophore®, insbesondere Cremophor® RH40, ein mit 40 EO-Einheiten alkoxiliertes hydriertes Ricinusöl, oder Cremophor® EL, ein mit 35 EO-Einheiten alkoxiliertes Ricinusöl, und Solutole®, insbesondere Solutol® HS 15, ein etwa im Pharmabereich als Macrogol-15-hydroxystearat bekanntes Produkt.

Polyamide umfassen Homo- und Copolymere, die durch Kondensationsreaktionen aus Alkyl- und Aryl-haltigen Di-Aminen und Di-Säuren, aus Alkyl- und Aryl-haltigen Aminocarbonsäuren oder aus Lactamen hergestellt werden können.

Homo- und Copolymere von N-Vinylverbindungen sind beispielsweise die Polyvinylpyrrolidone. Polyvinylpyrrolidone sind erfindungsgemäß die Homo- und Copolymere des N-Vinylpyrrolidons, insbesondere die wasserlöslichen Polyvinylpyrrolidone. Polyvinylpyrrolidone sind erfindungsgemäß auch quervernetzte, wasserunlösliche Polyvinylpyrrolidone (Crospovidone).

Geeignete Copolymere weisen vorzugsweise einen N-Vinylmonomer-Anteil von mindestens 20 Gew.-% auf als Hauptmonomere. Als Comonomere kommen alle mit dem Hauptmonomer radikalisch copolymerisierbaren Monomere in Betracht.

Copolymere im Sinne der vorliegenden Erfindung können auch aus zwei oder mehreren der Hauptmonomere bestehen.

Die Zahl der Comonomere in einem Polymer ist an sich nicht begrenzt. Üblicherweise liegt sie jedoch unter 5.

Hauptmonomere sind Vinyllactame wie N-Vinylpyrrolidon, N-Vinylpiperidon und N-Vinylcaprolactam, deren Derivate wie 3-Methyl-, 4-Methyl- und 5-Methyl-N-Vinylpyrrolidon sowie deren Mischungen untereinander; Vinylester aliphatischer C1-bis C22-Carbonsäuren wie Vinylacetat und dessen nach der Polymerisation durch Hydrolyse erhältliche Vinylalkohol sowie Vinylpropionat, Vinylbutyrat, Vinyllaurat oder Vinylstearat; Vinylamide wie N-Vinylformamid und dessen nach der Polymerisation durch Hydrolyse erhältliches N-Vinylamin sowie N-Vinyl-N-methylacetamid; N-Vinylimidazole, die auch in 2-, 4- oder 5-Position mit C₁-C₄-Alkyl- oder aromatischen Resten, insbesondere Methyl- oder Phenyl-Resten, substituiert sein können, wie 1-Vinylimidazol, 2-Methyl-1-vinylimidazol, 4-Methyl-1-vinylimidazol, 5-Methyl-1-vinylimidazol sowie deren quaternisierten Analoga wie 3-Methyl-1-vinylimidazoliumchlorid, 3-Methyl-1-vinylimidazoliummethylsulfat, sowie am Stickstoff mit C₁- bis C₂₄-Alkyl-substituierte Diallylamine wie Diallyldimethylamin und deren quaternisierten Analoga wie Diallylammoniumchlorid und Diallyldimethylammoniumchlorid.

Bevorzugte Hauptmonomere sind Vinyllactame wie N-Vinylpyrrolidon, N-Vinylcaprolactam und 5-Methylpyrrolidon, Vinylacetat und dessen nach der Polymerisation durch Hydrolyse erhältliches Vinylalkohol, N-Vinylformamid und dessen nach der Polymerisation durch Hydrolyse erhältliches N-Vinylamin sowie 1-Vinylimidazol, 3-Methyl-1-vinylimidazoliumchlorid und 3-Methyl-1-vinylimidazoliummethylsulfat.

Ganz besonders bevorzugte Hauptmonomere sind N-Vinylpyrrolidon, N-Vinylcaprolactam, Vinylacetat und dessen nach der Polymerisation durch Hydrolyse erhältliches Vinylalkohol sowie 1-Vinylimidazol.

Weitere Comonomere sind von der Erfindung umfasst. Die Zahl der Comonomere ist nicht limitiert, beträgt üblicherweise aber meist nicht mehr als vier Comonomere. Die Comonomere sind ausgewählt aus der Gruppe der Acrylsäuren und deren Amiden sowie Salze und Ester, wobei die Substituenten an den Kohlenstoffatomen in der 2- oder 3-Position der Acrylsäure stehen und unabhängig voneinander ausgewählt sind aus der Gruppe bestehend aus C₁-C₁₈-Alkyl, -CN, -COOH. Beispiele für Acrylsäuren sind Acrylsäure und dessen Anhydrid, Methacrylsäure, Ethylacrylsäure, 3-Cyanoacrylsäure, Maleinsäure, Fumarsäure, Crotonsäure, Maleinsäureanhydrid sowie dessen Halbester, Itaconsäure, Zimtsäure, 3-Butensäure, 4-Pentensäure, 5-Hexensäure, 6-Heptensäure, 7-Octensäure, 10-Undecensäure, Citraconsäure oder Mesaconsäure; Acrylamide sind Acrylamid, N-Methylacrylamid, N,N-Dimethylacrylamid, N-Ethylacrylamid, N-1-Propylacrylamid, N-2-Propylacrylamid, N-Butylacrylamid, N-2-Butylacrylamid, N-t-Butylacrylamid, N-Octylacrylamid, N-t-Octylacrylamid, N-Octadecylacrylamid, N-Phenylacrylamid, N-Dodecylacrylamid, Laurylacrylamid oder Stearylacrylamid; Methacrylamide sind Methacrylamid, N-Methylmethacrylamid, N,N-Dimethylmethacrylamid, N-Ethylmethacrylamid, N-1-Propylmethacrylamid, N-2-Propylmethacrylamid, N-Butylmethacrylamid, N-2-Butylmethacrylamid, N-t-Butylmethacrylamid, N-Octylmethacrylamid, N-t-Octylmethacrylamid, N-Octadecylmethacrylamid, N-Phenylmethacrylamid, N-Dodecylmethacrylamid, N-Laurylmethacrylamid oder Stearyl(meth)acrylamid; andere Amide sind Ethacrylamid, Maleimid, Fumarsäuremonoamid oder Fumardiamid mit beispielsweise Ammoniak oder Alkylaminen wie Methylamin, Fumardiimid; als Aminoalkyl(meth)acrylamide kommen (Dimethylamino)methyl(meth)acrylamid, 2-(Dimethylamino)ethyl(meth)acrylamid, 2-(Dimethylamino)propyl(meth)acrylamid, 2-(Diethylamino)propyl(meth)acrylamid 3-(Dimethylamino)propyl(meth)acrylamid, 3-(Diethylamino)propyl(meth)acrylamid, 3-(Dimethylamino)butyl(meth)acrylamid, 4-(Dimethylamino)butyl(meth)acrylamid, 8-(Dimethylamino)octyl(meth)acrylamid, 12-(Dimethylamino)dodecyl(meth)acrylamid und deren am Amin mit beispielweise Methylchlorid, Ethylchlorid, Dimethylsulfat oder Diethylsulfat quaternierten Analoga wie beispielsweise 3-(Trimethylammonium)propyl-(meth)acrylamid chlorid in Frage. Ebenso umfasst sind die C₁-C₁₈-Alkylacrylate sowie deren analogen C₁-C₁₈-Alkyl-(meth)acrylate wie zum Beispiel Methyl(meth)acrylat, Ethyl(meth)acrylat, n-Propyl(meth)acrylat, iso-Propyl(meth)acrylat, n-Butyl(meth)acrylat, iso-Butyl(meth)acrylat, t-Butyl(meth)acrylat, 2-Ethylhexyl(meth)acrylat, Decyl(meth)acrylat, Dodecyl(meth)acrylat, Lauryl(meth)acrylat, Stearyl(meth)acrylat, 2,3-Dihydroxypropyl(meth)acrylat, 2-Hydroxyethyl(meth)acrylat, 2-Hydroxypropyl(meth)acrylat, 3-Hydroxypropylvacrylat, 2-Methoxyethyl(meth)acrylat, 2-Methoxypropyl(meth)acrylat, 3-Methoxypropyl(meth)acrylat, 2-Ethoxyethyl(meth)acrylat, 2-Ethoxypropyl(meth)acrylat, 3-Ethoxypropyl(meth)acrylat, Glycerylmono(meth)acrylat, Ureidoethyl(meth)acrylat, Ureidopropyl(meth)acrylat oder Alkylenglykol(meth)acrylate und Polyalkylenglykol(meth)acrylate mit insgesamt 2 bis 200 EO- bzw. PO-Einheiten bzw. EO-/PO-Einheiten mit Wasserstoff-, Hydroxy-, Amino-, Carbonsäure-, Sulfonsäure- oder Alkoxy-Gruppe wie Methoxy- und Ethoxy-Gruppen am Kettenende.
Als weitere Comonomere kommen auch die C₁-C₁₈-Alkylethacrylate wie Methylethacrylat, Ethylethacrylat, n-Butylethacrylat, iso-Butylethacrylat, t-Butyl-ethacrylat, 2-Ethylhexylethacrylat, Decylethacrylat, 2-Hydroxyethylethacrylat, 2-Methoxyethylacrylat, 2-Methoxyethylethacrylat und 2-Ethoxyethylethacrylat in Frage.
Ebenso erfindungsgemässe Monomere sind die Aminoalkylacrylate und die diesen analogen Aminoalkyl(meth)acrylate wie N,N-Dimethylaminomethyl(meth)acrylat, N,N-Diethylaminomethyl(meth)acrylat, 2-(N,N-Dimethylaminoethyl)(meth)acrylat, 2-(N,N-Diethylaminoethyl)(meth)acrylat, 3-(N,N-Dimethylaminopropyl)(meth)acrylat, 3-(N,N-Diethylaminopropyl)(meth)acrylat, 4-(N,N-Dimethylaminobutyl)(meth)acrylat, 4-(N,N-Diethylaminobutyl)(meth)acrylat, 6-(N,N-Dimethylaminohexyl)(meth)acrylat, 8-(N,N-Dimethylaminooctyl)(meth)acrylat, 12-(N,N-Dimethylaminododecyl)(meth)acrylat und deren am Amin mit beispielweise Methylchlorid, Ethylchlorid, Dimethylsulfat oder Diethylsulfat quaternierten Analoga.

Auch die Alkylester und Alkylamide und Imide der Maleinsäure sind umfasst: in Frage kommen die Monoester sowie einheitliche und gemischte Diester der Maleinsäure mit Methanol, Ethanol, 1-Propanol, 2-Propanol, n-Butanol, 2-Butanol, tert.-Butanol, Alkylenglykol oder Polyalkylenglykol mit insgesamt 2 bis 200 EO- bzw. PO-Einheiten bzw. EO-/PO-Einheiten mit Wasserstoff-, Hydroxy-, Amino-, Carbonsäure-, Sulfonsäure- oder Alkoxy-Gruppe wie Methoxy- und Ethoxy-Gruppen am Kettenende sowie die den Estern analogen Amide; als Maleimide kommen die Imide von Alkylaminen mit C₁-C₄-Alkylresten wie Methyl, Ethyl, Propyl, iso-Propyl, Butyl, iso-Butyl oder einem tert.-Butylrest in Frage.
Weitere Amin-haltige Monomeren sind Vinyl- oder N-Allyl-substituierte heterocyclische Verbindungen wie N-Vinylpyridin, 2-Vinylpyridin, 3-Vinylpyridin, N-Allylpyridin, 2-Allylpyridin, 3-Allylpyridin.

Ether-haltige Monomere sind C₁-C₁₈-Alkyl-Vinylether wie Methyl-, Ethyl-, Butyl- oder Dodecylvinylether, C₁-C₁₈-Alkyl-Allylether wie Methyl-, Ethyl-, Butyl- oder Dodecylallylether sowie die Vinyl- oder Allylalkohol-Ether von Polyethylenoxid bzw. Polypropylenoxid bzw. Poly(ethylenoxid-co-propylenoxid) mit insgesamt 2 bis 200 EO- bzw. PO-Einheiten bzw. EO-/PO-Einheiten mit Wasserstoff-, Hydroxy-, Amino-, Carbonsäure-, Sulfonsäure- oder Alkoxy-Gruppe wie Methoxy- und Ethoxy-Gruppen am Kettenende.

Weitere geeignete Comonomere sind Vinyloxazoline wie N-Vinyloxazolin, N-Vinylmethyloxazolin, N-Vinylethyloxazolin, N-Vinylpropyloxazolin, N-Vinylbuthyloxazolin und N-Vinylphenyloxazolin.

Weitere Comonomere sind Vinyl- oder Allylhalogenide wie Vinylchlorid, Allylchlorid, Vinylidenchlorid und 4-Vinylbenzylchlorid.

Weiterhin eignen sich olefinisch ungesättigte Kohlenwasserstoffe mit mindestens einer Kohlenstoff-Kohlenstoff Doppelbindung wie Styrol, alpha-Methylstyrol, Vinyltoluol, tert.-Butylstyrol, Butadien, Isopren, Cyclohexadien, Ethylen, Propylen, 1-Buten, 2-Buten, Isobuten, 4-Aminostyrol, 3-N,N-Dimethylaminostyrol, 3-N,N-Diethylaminostyrol, 3-N,N-Diphenylaminostyrol, 4-N,N-Dimethylaminostyrol, 4-N,N-Diethylaminostyrol und 4-N,N-Diphenylaminostyrol.

Ebenso eignen sich Monomere wie Methylvinylketon, Vinylfuran und Allylalkohol.

Weiterhin eignen sich ungesättigte Sulfonsäuren wie zum Beispiel Acrylamidopropansulfonsäure, Styrolsulfonat, Methacrylsäureamidopropyl-dimethylammoniumpropylsulfobetaine, Acrylsäure-(3-sulfopropyl)ester-Kaliumsalz, Itakonsäure-bis-(3-sulfopropyl)-ester-Di-Kalium-Salz, Methacrylsäure-(3-sulfopropyl)-ester-Kaliumsalz, Natrium-3-allyloxy-2-hydroxypropan-1-sulfonat, Vinylbenzolsulfonsäure, Vinylsulfonsäure, 2-Acrylamido-2-methylethan-sulfonsäure, Methacrylsäureamidoethyldimethylammoniumpropyl-sulfobetaine, Methacrylsäureamidoethyl-dimethylammoniumethylsulfobetaine, Acrylsäure-(3-sulfopropyl)ester-Natriumsalz, Acrylsäure-(3-sulfoethyl)ester-Kaliumsalz, Acrylsäure-(3-sulfoethyl)ester-Natriumsalz, Itakonsäure-bis-(3-sulfopropyl)-ester-Di-Natrium-Salz, Itakonsäure-bis-(3-sulfoethyl)-ester-DiKalium-Salz, Itakonsäure-bis-(3-sulfoethyl)-ester-Di-Natrium-Salz, Methacrylsäure-(3-sulfoethyl)-ester-Kaliumsalz, Methacrylsäure-(3-sulfopropyl)-ester-Natriumsalz, Methacrylsäure-(3-sulfoethyl)-ester-Natriumsalz, Kalium-3-allyloxy-2-hydroxypropan-1-sulfonat, Natrium-3-allyloxy-2-hydroxyethan-1-sulfonat, Kalium-3-allyloxy-2-hydroxyethan-1-sulfonat.

Von den genannten Comonomeren bevorzugt sind Acrylsäure, Methacrylsäure, Maleinsäure, Maleinsäureanhydrid, N-Methylacrylamid, N,N-Dimethylacrylamid, N-2-propylacrylamid, N-t-Butylacrylamid, N-Octadecylacrylamid, N-Laurylacrylamid, N-Stearylacrylamid, Methacrylamid, N-Methylmethacrylamid, N-2-Propylmethacrylamid, N-t-Butylmethacrylamid, N-Octadecylmethacrylamid, N-Laurylmethacrylamid, Stearyl(meth)acrylamid, Maleimid, 2-(Dimethylamino)ethyl(meth)acrylamid, 3-(Dimethylamino)propyl(meth)acrylamid, 4-(Dimethylamino)butyl(meth)acrylamid, Methylacrylat, Ethylacrylat, iso-Propylacrylat, t-Butylacrylat, 2-Ethylhexylacrylat, Laurylacrylat, Stearylacrylat, 2-Hydroxyethylacrylat, 3-Hydroxypropylacrylat, 2-Ethoxyethylacrylat, 3-Ethoxypropylacrylat, Ureidoethylacrylat, Ureidopropylacrylat, Alkylenglykolacrylate und Polyalkylenglykolacrylate mit insgesamt 2 bis 200 EO- bzw. PO-Einheiten bzw. EO-/PO-Einheiten mit Wasserstoff-, Hydroxy-, Amino-, Carbonsäure-, Sulfonsäure- oder Alkyoxy-Gruppe wie Methoxy- und Ethoxy-Gruppen am Kettenende, Methylmethacrylat, iso-Propylmethacrylat, n-Butylmethacrylat, t-Butylmethacrylat, 2-Ethylhexylmethacrylat, Stearylmethacrylat, 2-Hydroxyethylmethacrylat, 3-Hydroxypropylmethacrylat, Ureidoethylmethacrylat, Ureidopropylmethacrylat, Alkylenglykolmethacrylate und Polyalkylenglykolmethacrylate mit insgesamt 2 bis 200 EO- bzw. PO-Einheiten bzw. EO-/PO-Einheiten mit Wasserstoff-, Hydroxy-, Amino-, Carbonsäure-, Sulfonsäure- oder Alkyoxy-Gruppe wie Methoxy- und Ethoxy-Gruppen am Kettenende, 3-(N,N-Dimethylaminopropyl)(meth)acrylat, einheitliche und gemischte Diester der Maleinsäure mit Methanol, Ethanol, 1-Propanol, 2-Propanol, n-Butanol, tert.-Butanol, Methyl-, Butylvinylether, die Ether von Vinyl- oder Allylalkohol mit Polyethylenoxid bzw. Polypropylenoxid bzw. Poly(ethylenoxid-co-propylenoxid) mit insgesamt 2 bis 200 EO- bzw. PO-Einheiten bzw. EO-/PO-Einheiten mit Wasserstoff-, Hydroxy-, Amino-, Carbonsäure-, Sulfonsäure- oder Alkyoxy-Gruppe wie Methoxy- und Ethoxy-Gruppen am Kettenende; N-Vinylimidazole, die in 2-, 4- oder 5-Position mit C₁-C₄-Alkyl- oder aromatischen Resten wie insbesondere Methyl- oder Phenyl-Resten, substituiert sein können, Acrylamidopropansulfonsäure und Styrolsulfonat.

Von diesen Comonomeren ganz besonders bevorzugt sind Acrylsäure, Methacrylsäure, Maleinsäure, Maleinsäureanhydrid, N-Methylacrylamid, N-t-Butylacrylamid, Methacrylamid, N-2-Propylmethacrylamid, 3-(Dimethylamino)propyl(meth)acrylamid, Methylacrylat, Ethylacrylat, iso-Propylacrylat, t-Butylacrylat, 2-Ethylhexylacrylat, Laurylacrylat, Stearylacrylat, 2-Hydroxyethylacrylat, Methylmethacrylat, iso-Propylmethacrylat, 2-Ethylhexylmethacrylat, 2-Hydroxyethylmethacrylat, Ureidopropylmethacrylat, Polyalkylenglykolmethacrylate mit insgesamt 2 bis 200 EO- bzw. PO-Einheiten bzw. EO-/PO-Einheiten mit Wasserstoff-, Hydroxy-, Amino-, Carbonsäure-, Sulfonsäure- oder Alkyoxy-Gruppe wie Methoxy- und Ethoxy-Gruppen am Kettenende sowie 3-(N,N-Dimethylaminopropyl)(meth)acrylat.

Homo- und Copolymere sind bevorzugt Polyvinylformamid, Polyvinylamin, Polyvinylcaprolactam sowie die Homo- und Copolymere von N-Vinylpyrrolidon und N-Vinylcaprolactam, von N-Vinylpyrrolidon mit N-Vinylcaprolactam, von N-Vinylpyrrolidon mit N-Vinylimidazol, von N-Vinylpyrrolidon mit Vinylacetat und Vinylpropionat und dessen höheren Homologen mit bis zu 20 Kohlenstoffen in der Carbonsäure, sowie von N_Vinylpyrrolidon mit N-Vinylcaprolactam und weiteren Comonomeren, insbesondere Vinylethern von aliphatischen Carbonsäuren wie zum Beispiel Vinylacetat, Vinylpropionat und deren höheren Homologen mit bis zu 20 Kohlenstoffen in der Carbonsäure.

Weitere bevorzugte Polymere werden erhalten aus kationisierten Derivaten von N-Vinylimidazol mit N-Vinylpyrrolidon, mit N-Vinylcaprolactam oder gegebenenfalls weiteren Comonomeren.

Ebenso bevorzugte Polymere sind solche aus Ethylenimin und gegebenenfalls weiteren Comonomeren erhaltenen Polymere und deren modifizierte Produkte aus den der Polymerisation nachgelagerten Reaktionsschritten.

Erfindungsgemäß bevorzugte Polymere sind auch quervernetzte, wasserunlösliche Polyvinylpyrrolidon-Polymere wie Crospovidon sowie Crospovidon-analoge Copolymere aus N-Vinylpyrrolidon und N-Vinylimidazol, aus N-Vinylpyrrolidon und N-Vinylcaprolactam, aus N-Vinylpyrrolidon und Vinylacetat, aus N-Vinylformamid odernach der Polymerisation - dessen teilweises oder vollständiges Hydrolysat Vinylamin.

Insbesondere eignen sich Copolymere aus N-Vinylpyrrolidon (VP) mit Vinylacetat mit einem Gewichtsverhältnis VP/VAc von 20:80 bis 80:20, beispielsweise 30:70, 50:50, 60:40, 70:30, mit K-Werten von 10 bis 100, vorzugsweise 20 bis 50; Copolymere aus VP und VI, beispielsweise mit einem Gewichtverhältnis VP/VI von 1:1; Copolymere aus VP und VCap, beispielsweise mit einem Gewichtsverhältnis von 1:1, mit K-Werten von 10 bis 100, vorzugsweise 20 bis 75.

Weiterhin sind insbesondere Copolymere aus N-Vinylpyrrolidon oder N-Vinylcaprolactam und 1-Vinyl-3-methylimidazoliumchlorid oder 1-Vinyl-3-methylimidazoliumsulfat (erhalten durch Quaternierung von 1-Vinylimidazol mit Methylchlorid beziehungsweise Dimethylsulfat) mit einem Gewichtsverhältnis von VP/QVI von 20:80 bis 99:1 bevorzugt, wobei die Copolymere Molekulargewichte von 40.000 bis >1.000.000 Dalton aufweisen können

Insbesondere werden durch die erfindungsgemäß verwendeten Verbundfolien erfindungsgemäß wasserlösliche NVP-Homopolymeren mit K-Werten von 1 bis 150, vorzugsweise K10 bis K120, beispielsweise K12, K15, K 17, K25, K30, K60, K85, K90, K 115, 120, stabilisiert.

Weiterhin sind insbesondere die quervernetzten, wasserunlöslichen Polyvinylpyrrolidon-Polymere wie Crospovidon sowie Crospovidon-analoge Copolymere aus N-Vinylpyrrolidon und N-Vinylimidazol, aus N-Vinylpyrrolidon und N-Vinylcaprolactam und aus N-Vinylpyrrolidon und Vinylacetat umfasst.

Oxidationsempfindliche Polymere im Sinne dieser Erfindung sind desweiteren Mischungen, die die oxidationsempfindlichen Polymere enthalten. Die Mischungen können zum Beispiel erhalten werden durch Mischen der anderen Bestandteile mit den oxidationsempfindlichen Polymeren nach deren separaten Herstellung oder durch Mischen in einem gemeinsamen vorgelagerten Prozessschritt wie der Coextrusion, der Trocknung von Lösungen oder Suspensionen, die solche Polymere enthalten, oder der Polymerisation. Beispielweise kann Vinylacetat in Gegenwart von unter anderem Polyvinylpyrrolidon als Hilfsmittel polymerisiert werden.
Unter anderen Bestandteilen werden auch andere Polymere und organische und anorganische Substanzen verstanden. Andere Bestandteile können auch andere Polymere ausgewählt aus den erfindungsgemäßen oxidationsempfindlichen Polymeren sein. Solche Mischungen können je nach Anwendung und Einsatzzweck nachträglich oder vor der Mischung mit weiteren Additiven wie Farbstoffen, Pigmenten, Emulgatoren, Tensiden, Geruchsstoffen, Wirkstoffen oder sonstigen Effektstoffen versetzt werden und erst nach diesem weiteren Mischschritt in die Verpackungsformen abgefüllt werden.
Solche Mischungen von oxidationsempfindlichen Polymeren sind erfindungsgemäß auch in flüssiger oder pastöser Form wie Cremes, Öle, Lösungen oder Suspensionen von der Erfindung umfasst.

Unter anderen Bestandteilen wie organische und anorganische Substanzen werden auch geeignete Löse- oder Dispergiermittel wie Wasser, Alkohole wie Methanol, Ethanol, Propanol, Isopropanol, Butanol, Glyzerine, Glykole, Polyethylenglykole, aliphatische oder aromatische Kohlenwasserstoffe oder deren Mischungen verstanden. Bevorzugt enthalten die flüssigen oder pastösen Mischungen Wasser, Alkohole oder Wasser und Alkohole, wobei diese Alkohole insbesondere Methanol, Ethanol und/oder Isopropanol sind.

Bevorzugte Mischungen enthalten Polyvinylpyrrolidon, Crospovidon, Pfropfpolymere aus PEG und/oder nicht, teilweise oder vollständig zu Vinylalkohol hydrolysiertem Vinylacetat sowie Copolymere von N-Vinylpyrrolidon und Vinylacetat.

Gemäß einer weiteren bevorzugten Ausführungsform der Erfindung wird die Verpackungsform für vernetzte wasserunlösliche Vinyllactam-Homo- und Copolymere eingesetzt. Solche vernetzte Polymere können chemisch oder physikalisch vernetzt sein. Bevorzugt sind Polymere, die mit Divinylethylenharnstoff oder *in situ* erzeugten Vernetzern wie zum Beispiel 1-Vinyl-3-ethylidenpyrrolidon und Ethyliden-bis-3-(N-vinylpyrrolidon) vernetzt sind. Insbesondere sind dies Crospovidon oder ein Copolymer aus VI und VP im Gewichtsverhältnis 90: 10 mit 2 Gew.-% Divinylethylenharnstoff, bezogen auf die Gesamtmenge an VP und VI.

Die Herstellung solcher Polymere durch radikalische Polymerisation ist an sich bekannt. Die Polymerisation kann auch in Gegenwart von sonstigen üblichen Vernetzern erfolgen.

Die Polymerisation kann beispielsweise als Lösungspolymerisation in einem geeigneten Lösungsmittel wie Wasser, Gemischen aus Wasser und organischen Lösungsmitteln, beispielsweise Ethanol-Wasser oder Isopropanol-Wasser-Gemischen oder in rein organischen Lösungsmitteln wie Ethanol, Isopropanol oder Estern wie Ethylacetat oder Butylacetat erfolgen.

Eine weitere mögliche Polymerisationsmethode ist die an sich bekannte Popcornpolymerisation, die zu einem quervernetzten wasserunlöslichen Polymer führt (Breitenbach et al., IUPAC International Symposium on Macromolecular Chemistry, Budapest 1969 (pp.529-544).

Als Verbundfolien werden mehrschichtige Folien (Multilayer-Folien oder Mehrschicht-Folien oder -laminate) bezeichnet, aus denen flexible oder selbsttragende Verpackungen gefertigt werden können. Verbundfolien mit Sperrschichteigenschaften werden auch als Barrierefolien bezeichnet. Die für die Verpackungsformen verwendeten Verbundfolien enthalten Barriereschichten, die die Gasdurchlässigkeit, insbesondere die Sauerstoffdurchlässigkeit, einschränken sollen. Die Verbundfolien können eine oder mehrere Barriereschichten enthalten. Bevorzugt enthalten die Verbundfolien eine Barriereschicht.

Die Gasdurchlässigkeit wird dabei bezogen auf ein gewähltes Referenzgas, wie Sauerstoff, angegeben.
Nach Bestimmungsmethoden ASTM D3985, DIN 53380/3 weisen die Folien und die Verpackungsformen daraus eine Sauerstoff-Permeabilität von weniger als 0,5, bevorzugt von weniger als 0,45 und besonders bevorzugt von 0,4 cm³/(m² x d x bar) und geringer bei 23°C und 50% relativer Luftfeuchtigkeit auf.

Die Norm ASTM D3985, die zur Ermittlung der Barriereeigenschaften von Mehrschichtstrukturen verwendet wird, beschreibt die konstante Sauerstoffdurchlässigkeitsrate von EVOH und wird mittels Coulometers an Folien (Prüfkörpern) ermittelt.

Die Wasserdampfpermeabilität der Verbundfolien und der Verpackungsformen daraus ist nach ASTM F1249 geringer als 0,5, bevorzugt geringer als 0,4 und insbesondere bevorzugt 0,3 g/cm²xd und geringer bei einer Temperatur von 23°C und 85 % relativer Luftfeuchtigkeit.
Nach alternativer Bestimmungsmethode ist die Wasserdampfpermeation nach DINEN12086-KlimaB kleiner als 0,5, bevorzugt kleiner als 0,4 und insbesondere bevorzugt kleiner gleich 0.35g/m²xd.

Eine Verbundfolie ist aus einzelnen Schichten gefertigt. Der Aufbau der einzelnen Mono-Folien zum Verbund kann dabei durch lösungsmittelhaltige oder lösungsmittelfreie Kleberkaschierung geschehen. Weiterhin möglich ist auch die Extrusionskaschierung und Extrusionsbeschichtung.

Beim Extrudieren werden die für die jeweiligen Schichten vorgesehenen aufgeschmolzenen und homogenisierten Polymere kontinuierlich unter Druck durch eine Düse gepresst, bevor sie durch Vakuum an ein formgebendes Profil angedrückt werden und in einem Wasserbad herunterkühlen. Die Extrusion kann als Extrusions- oder Co-Extrusionsbeschichtung erfolgen.

Unter Kaschieren versteht man einen Prozess, der das Verbinden mehrerer Lagen von Folien gleicher oder verschiedener Materialien durch ein sogenanntes Kaschiermittel (Lack, Wachs, Leim) zum Ziel hat. Durch Kaschur kann man gewünschte Materialeigenschaften addieren und auch eine schützende und dekorative Schicht auftragen. Laminieren bedeutet, eine dünne Folienschicht mittels eines Klebers an ein Trägermaterial zu binden. Durch den bei Zimmertemperatur festen Klebstoff verschmelzen beim Heißlaminieren zum Beispiel zwei Folien miteinander, während sie gemeinsam über eine heiße Rolle geführt werden. Kaltlamination dagegen kann ohne besonderes Gerät von Hand vorgenommen werden, da sich in der Folientasche ein normaler Klebstoff befindet.

Als Trägerfolie wird die Folienschicht bezeichnet, die üblicherweise zur Bedruckung der Folie (die "Außenseite" der Verbundfolie) genutzt werden soll. Da die Trägerfolie meist nur eine unzureichende Eigenbarriere aufweist, wird zusätzlich mindestens eine Barriereschicht in Form einer Siegelfolie eingebracht. Im einfachsten Fall ist die resultierende Verbundfolie dann eine aus drei Schichten bestehende Folie, die auch als Triplex bezeichnet wird.
Es ist auch möglich, Trägerfolien mit unterschiedlichen Barriereschichten zu kombinieren.

Je nach eingesetztem Trägermaterial können die Eigenschaften einer Verbundfolie sehr stark variieren. Die am häufigsten eingesetzten Materialien sind neben Polyestern, Polyamid (PA) und Polyvinylchlorid auch Zellglas und Polyolefine.

Als Polyester eignen sich beispielsweise Polycarbonate oder Polyethylenterephthalate (PET).

Als Polyolefine eignen sich beispielsweise Polypropylen (PP) oder Polyethylen (PE). Diese Polyolefine können sowohl als Low Density (LD), Medium Density (MD) oder High Density (HD) Produkte eingesetzt werden, insbesondere LD Polyethylen (LDPE). Zellglas oder Zellulosehydrat ist einer der ältesten Kunststoffe für Verpackungsmaterialien; es handelt sich um eine dünne, transparente, farblose Folie aus Viskose mit einem charakteristischen Knistereffekt.

Die Barriereschicht besteht mindestens aus einem Polyvinylalkohol-Polymeren. Unter Polyvinylalkoholen werden erfindungsgemäß Copolymere aus Ethylen und Vinylalkohol verstanden. Als Comonomere können vernetzend wirkende Verbindungen eingesetzt werden, die das an sich wasserlösliche Polyvinylalkohol-Homopolymere wasserunlöslich machen. Es können aber auch Copolymere aus Vinylalkohol und monoolefinisch ungesättigten Comonomeren eingesetzt werden. Als Comonomere kommen insbesondere in Betracht Ethylen, Propylen, 1-Buten, Acrylsäure, Methacrylsäure, Crotonsäure, Phthalsäure, Maleinsäure, Acrylamid, Methacrylamid, oder N-C₁-C₁₈-Alkyl-(Meth)acrylamide. Weiterhin eignen sich als Comonomere N-Vinyl-Monomere wie N-Vinylpyrrolidon, N-Vinylformamid, N-Vinylacetamid, C₁-C₁₈-Alkyl- oder-Hydroxyalkylvinylether, Vinylsilane, Allylvervindungen wie Allylalkohol oder Allylacetat. Insbesondere bevorzugte Polyvinylalkohol-Polymere sind Ethylen-Vinylalkohol-Polymere, mit einem Ethylen-Gehalt von 20 bis 60, bevorzugt 25 bis 55 mol-%, die durch Copolymerisation von Ethylen und Vinylacetat und anschließende Verseifung der Acetatgruppen erhalten werden. Der Verseifungsgrad kann 90 bis 99.5 mol-% betragen, wobei 98-99 mol-% bevorzugt ist.
Besonders bevorzugt sind Copolymere aus Ethylen und Vinylalkohol, die auch als EVA- oder EVOH-Polymere bezeichnet werden. Solche Polymere sind kommerziell erhältlich, beispielsweise als EVAL™-Harze der Firma Kuraray, etwa die Produktreihen EVAL™ F (32mol% Ethylen) mit den Produkten EVAL™ F171B, EVAL™ F101B sowie EVAL™ EF-XL oder EVAL™ L (27mol% Ethylen) mit dem Produkt EVAL™ L101B usw..

Zwischen den einzelnen Schichten können auch Haftschichten (ADL: Adhesive Layer) vorgesehen sein.
Haftschichten können aufgrund der für die Herstellung der Verbundfolien eingesetzten Herstellverfahren vorhanden sein, also zum Beispiel bei der Herstellung durch Klebekaschierung oder Laminierung. Haftschichten empfehlen sich aber auch, wenn zwischen den aneinandergrenzenden Schichten keine ausreichende Kompatibilität besteht. Die Haftschicht kann aus üblichen natürlichen, halbsynthetischen oder synthetischen Klebstoffen bestehen. Bevorzugte Haftkleber sind solche, die durch Extrusion verarbeitbar sind.
Geeignete Haftkleber sind Pfropf- oder lineare Copolymere.
Als Haftkleber geeignet sind unter anderem Kautschuk-Elastomere, beispielsweise Polyisobuten oder Ethylen-Propylen-Kautschuke.

Geeignete Haftkleber sind insbesondere durch Pfropfung säure- oder anhydridmodifizierte Polyolefine. Die Pfropfung kann etwa mit Maleinsäure oder Maleinsäureanhydrid erfolgen, wobei die Maleinsäureanhydrid-modifizierten Polyolefine auch ganz oder teilweise verseift sein können. Polyolefine sind in diesem Zusammenhang insbesondere LLDPE (Linear Low Density Poly-Ethylen) oder Copolymere von Ethylen und Acrylsäure oder Ethylen/Vinylacetat, wobei die Acetatgruppen auch ganz oder teilweise verseift sein können.
Solche Haftkleber sind kommerziell verfügbar, beispielsweise als Bynel®-Typen der Firma Dupont oder Modic® AP-Typen der Firma Mitsubishi Chemicals.
Auch Cellulose-Haftkleber eignen sich prinzipiell. Solche Haftkleber sind beispielsweise als Jelucel®-Typen kommerziell erhältlich.
Es können auch Gemische aus verschiedenen Haftklebern verwendet werden.

Die Verbundfolien und die daraus hergestellten Verpackungsformen weisen mindestens drei Schichten auf, wobei mindestens eine Trägerschicht und mindestens eine Barriereschicht vorgesehen sind. Die Anzahl der möglichen Schichten ist nicht begrenzt, jedoch werden bevorzugt Verbundfolien aus 3 bis 7, vorzugsweise 3 bis 5 Schichten eingesetzt.
Der Schichtaufbau kann symmetrisch oder unsymmetrisch sein. Es empfiehlt sich auf jeden Fall, auf beiden Seiten der Barriereschicht wasserabweisende Schichten vorzusehen, um die leicht hygroskopische Polyvinylalkohol-basierte Barriereschicht zu schützen.
Haftschichten können zwischen solchen Materialien angebracht werden, die im Folienverbund nicht von selbst gut aneinander haften.
Für die zum Füllgut hingewandte Seite der Verbundfolie ("Innenseite" oder "Produktberührende Seite") wird zweckmäßigerweise ein Material gewählt, das sich zum Füllgut inert verhält. Weiterhin soll das Material dieser Schicht möglichst keine Substanzen enthalten, die unter Lagerbedingungen in das Füllgut migrieren können wie Weichmacher, Antioxidantien, Antistatika oder Gleitmittel. Geeignete Materialien sind beispielsweise Polyamide, Polycarbonate, Polyethylenterephthalate, Polyolefine wie Polyethylen oder Polypropylen, vorzugsweise LD Polyethylen.

Es ist auch möglich, zusätzlich Aluminiumfolien als weitere Barriereschicht einzuarbeiten.
Die Schichtdicke der Verbundfolie kann, je nach Anzahl der insgesamt vorhandenen Schichten, 100 bis 1000 µm betragen. Die Schichtdicke der einzelnen Schichten kann von 5 bis 250 µm variieren. Typische Schichtdicken für die Barriereschichten liegen im Bereich von 10 bis 50, vorzugsweise 10 bis 25 µm. Typische Schichtdicken für die Haftschichten können 5 bis 50, vorzugsweise 5 bis 30 µm betragen. Trägerschichten können eine Dicke von 30 bis 300 µm aufweisen.

Beispiele für geeignete Schichtaufbauten sind:
PA/EVOH/PA/ADL/PO
PO/ADL/PA/EVOH/PA/ADL/PO
PA/EVOH/PA/ADL/PO
PE/ADL/EVOH/ADL/LDPE
PE/EVOH/LDPE
PA/ADL/PE/EVOH/LDPE
PET/ADL/EVOH/ADL/PET
PET/ADL/PA/EVOH/PET

Insgesamt ist jede gewünschte Kombination möglich.

Den Trägerschichten können auch übliche Additive wie farbgebende Mittel, Weichmacher, Antioxidantien, Antistatika, Gleitmittel oder Strukturverbesserer zugegeben werden.
Die zunächst flächig hergestellten Verbundfolien lassen sich zu jeder gewünschten Verpackungsform verschweißen oder verkleben, beispielsweise zu Säcken oder schlauchförmigen Verpackungsformen. Es ist auch möglich, feststehende Verpackungsformen wie Kunststoff- oder Pappfässer oder Pappkartons mit einer verschweißten oder verklebten Folie auszukleiden. Auch die Innenauskleidung von korrosionsempfindlichen Metallfässern mit den erfindungsgemäß verwendeten Verbundfolien ist möglich.

Es ist auch möglich, die Verbundfolien durch einen geeigneten Schichtaufbau so zu gestalten, dass sie zu selbsttragenden Verpackungsformen verarbeitet werden können.

Die Verpackungsformen teilt der Fachmann üblicherweise in flexible nicht selbsttragende, flexible selbsttragende oder nicht-flexible selbsttragende Verpackungsformen ein.

Die Verpackungsformen können unterschiedlich gestaltet sein. Gemeinsam ist allen Formen, dass sie einen Hohlraum aufweisen oder bilden können und ein oder mehrere Öffnungen aufweisen. Die Öffnungen sind offen oder verschlossen. Diese Öffnungen können mittels unterschiedlicher Mittel und Methoden verschlossen werden. In verschlossenem Zustand schließen die Formen das Innere des Hohlraums von der die Form umgebende Umgebung dicht ab, wobei der Austausch zwischen der äußeren Umgebung und des Inneren durch die Verschlussstelle durch die beschriebenen und sonstigen dem Fachmann bekannten Mittel und Methoden minimiert wird.

Die Verpackungsformen weisen, wenn sie flexibel und nicht-selbsttragend sind, typischerweise die Form eine Schlauches oder eines Sacks auf.

Der Schlauch und der Sack haben dabei in ihrer Rohform üblicherweise mindestens zwei offene Seiten. Eine offene Seite wird dabei vor dem Füllen mit dem Füllgut verschlossen. Die andere Seite wird nach dem Befüllen mit dem Füllgut verschlossen. Es ist aber auch möglich, dass der Schlauch und der Sack eine weitere dritte oder gar vierte oder fünfte Öffnung aufweisen. Diese kann beispielsweise dazu dienen, während der Befüllung oder Inertisierung das Verdrängen der in der Verpackungsform vorhandenen Gase zu erleichtern, indem die Gase durch eine andere Öffnung als die zur Befüllung mit dem Füllgut dienende Öffnung entweichen können. Ebenso ist es denkbar, eine oder mehrere dieser weiteren Öffnungen als Anschlüsse für Inertgasleitungen zu nutzen, um die Verpackungsform vor, während oder nach dem Befüllen von der umgebenden Atmosphäre abzuschirmen, etwa durch einen Strom von Inertgas in die Verpackungsform hinein, oder durch einen leichten Überdruck mittels Inertgaseinleitung. Solche schlauchförmigen Verpackungsformen ("Foliensäcke", auch als "Folienschlauch" oder "Folienschlauchsäcke" bekannt) sind zum Beispiel Flachsäcke oder Seitenfaltensäcke und sind dem Fachmann im Bereich Verpackungswesen bekannt.

Gemäß einer bevorzugten Ausführungsform werden als Verpackungsformen Seitenfaltensäcke eingesetzt. Ein Seitenfaltensack hat den Vorteil, dass er sich bei passenden Größenverhältnissen sehr gut der Innenform von Umverpackungen wie Kartons oder Fässern anpassen und dabei das in der Umverpackung zur Verfügung stehende Volumen sehr gut ausnützen kann. Seitenfaltensäcke sind insbesondere bevorzugt beim Einsatz von Umverpackungen mit eckigen oder näherungsweise eckigen Querschnitten wie Kartons.
Gemäß einer weiteren bevorzugten Ausführungsform werden als Verpackungsformen Flachsäcke eingesetzt. Sie sind besonders einfach und kostengünstig herstellbar, da sie keine Faltung des Folienschlauchs aufweisen wie die Seitenfaltensäcke. Dafür passen sie sich nicht so gut wie diese näherungsweise eckigen Umverpackungen an. Flachsäcke eignen sich aber gut für Umverpackungen mit rundlichen Querschnitten wie etwa Fässer.

Schlauchförmige Verpackungsformen können aus einem Folienschlauch hergestellt werden, der üblicherweise die Form einer sehr langen, flexiblen Schlauchröhre ("Endlos-Schlauch") ohne Längsnaht (in Richtung der größten Länge) aufweist. Die Schlauchröhre ohne Längsnaht wird also aus einem einzigen Stück produziert. Denkbar ist aber auch, dass ein solcher Endlosschlauch aus einer üblicherweise rechteckigen Folienbahn hergestellt wird durch festes Verbinden wie etwa Schweißen der zwei langen gegenüberliegenden Kanten der Rechteckform, wodurch wieder eine lange, flexible Schlauchröhre entsteht, die jetzt allerdings eine Längsnaht aufweist. Nähte sind jedoch potentielle Defektstellen.
Bevorzugt ist eine schlauchförmige Verpackungsform als Endlosschlauch ohne Längsnaht. Insbesondere bevorzugt sind Flachsäcke ohne Längsnaht und Seitenfaltensäccke ohne Längsnaht.

Schlauchförmige Verpackungsformen werden fertig konfektioniert zur Verpackung der Polymere bereit gestellt oder als unmittelbar vor der Abfüllung zu konfektionierender Endlosschlauch.
Fertig konfektionierte schlauchförmige Verpackungsformen sind beispielsweise die bereits genannten Flachsäcke und Seitenfaltensäcke.

Wird die Verpackungsform in Form des Endlosschlauchs bereit gestellt, so kann die Bereitstellung dieses Endlosschlauchs etwa als gefalteter Stapel oder flach zusammen gelegt und aufgerollt auf einer Rolle erfolgen.
Bevorzugt erfolgt die Breitstellung des Endlosschlauchs aufgerollt auf einer Rolle.
Der Endlosschlauch ist dabei üblicherweise flach gelegt und so gerollt.
Die Konfektionierung zur eigentlichen Verpackungsform erfolgt dann unmittelbar vor der Abfüllung mittels der dem Fachmann bekannten und geeigneten Geräte etwa zum Falten und Verschließen. Bevorzugt findet dabei das Verschließen des Folienschlauchs etwa zum Flachsack oder zum Seitenfaltensack durch Verschweißen statt.

Die Bereitstellung der schlauchförmigen Verpackungsformen insbesondere als aufgerollter Folien-Endlosschlauch sowie die Herstellung der eigentlichen Verpackungsform erst unmittelbar vor der Abfüllung der Polymere weist mehrere Vorteile auf:
Erstens ist die Größe der Verpackungsform (das Innenvolumen) sowie die exakte Form (etwa Flachsack oder Seitenfaltensack) bei jedem neuen Exemplar einer Verpackungsform direkt vor der Abfüllung wählbar ohne Unterbrechung des Befüllungsvorganges. Zweitens werden die Verpackungsformen platzsparend angeliefert. Drittens entfällt bei Verwendung eines Endlosschlauches das mechanisch aufwendige oder arbeitsintensive händische Einlegen der vorkonfektionierten Verpackungsformen in die Maschinen. Viertens wird die Möglichkeit zur Verunreinigung der Verpackungsform minimiert. Letzteres ist insbesondere von Vorteil bei der Abfüllung von Polymeren für sensible Anwendungen wie Medizintechnik, Pharma, Veterinärbereich und Lebensmittel.

Insgesamt bedeutet die Verwendung der Folien als Endlosschlauch und deren Konfektionierung zur eigentlichen Verpackungsform erst unmittelbar vor der Abfüllung eine schnelle, flexible und daher kostengünstige Vorgehensweise, die zusätzliche Vorteile im Bereich Produktreinheit ermöglicht im Vergleich zu bereits vorkonfektioniert zur Abfüllung angelieferten Verpackungsformen.

Insbesonders bevorzugte Ausführungsform ist daher die Verwendung der Folien als Endlosschlauch und deren Konfektionierung zur eigentlichen Verpackungsform erst unmittelbar vor der Abfüllung.

Verpackungsformen, die selbsttragend sind, sind üblicherweise Behälter wie Flaschen oder Fässer. Selbsttragende Verpackungsformen sind dem Fachmann im Bereich Verpackungswesen prinzipiell bekannt. Diese weisen mindestens eine Öffnung auf. Sie können wie die nicht-selbsttragenden Verpackungsformen befüllt werden. Weitere Öffnungen können, wie bei den flexiblen, nicht-selbsttragenden Verpackungsformen beschrieben, genutzt werden.

Nach dem Befüllen werden bei allen Verpackungsformen die noch unverschlossenen Öffnungen verschlossen.

Das Verschließen der Öffnungen der Verpackungsformen kann durch unterschiedliche Mittel und Methoden erfolgen wie zum Beispiel Verschweißen, Verkleben, Verleimen, Binden, Klemmen oder Verschrauben. Diese und weitere Methoden sind dem Fachmann im Verpackungswesen bekannt.

So kann beim Verschweißen ein Teil der Verbundfolie im Bereich einer Öffnung mit einem anderen Teil der Verbundfolie an einem anderen Bereich derselben Öffnung oder mit einem separaten Material, das seinerseits aus einer solchen oder anderen Einschichtfolien oder Verbundfolien bestehen kann, miteinander verbunden werden. Diese Verbindung erfolgt durch lokale Hitzeeinwirkung, so dass zumindest die äußerste Schicht der Verbundfolie schmilzt und sich mit dem anderen Teil zum Beispiel unter Anlegen eines mechanischen Druckes verbindet. Beim Abkühlen wird die Verbindung fest und im Idealfall so stabil wie der Rest der Folie an nicht verschweißten Bereichen. Bevorzugt werden üblicherweise die Folienteile möglichst flach aufeinandergelegt unter weitestgehender Vermeidung von Falten. Beim Verschweißen werden die Folienteile bevorzugt mittels Druck zusammengepresst und dann an der Druckstelle lokal erhitzt bis über den Schmelzpunkt zumindest des Materials der äußersten Folienschicht. Ein solches Vorgehen und dazu geeignete Geräte sind dem Fachmann bekannt.

Eine so entstandene Verbindung ist idealerweise so gas- und wasser-undurchlässig wie die Verbundfolie und verbessert damit die Gesamtwirkung der Verpackungsform in Bezug auf Eindringen von Wasser und Gasen wie etwa Sauerstoff.

Alternativ können die Verpackungsformen verklebt oder verleimt werden. Dabei werden in der Regel die Öffnungen analog zum Verschweißen geschlossen, indem zum Beispiel zwei Bereiche der Verbundfolie übereinandergelegt werden, so dass eine gemeinsame Fläche entsteht. Diese gemeinsame Fläche kann aus Außenseite und Außenseite, Außenseite und Innenseite oder Innenseite und Innenseite der Verbundfolie gebildet werden. Je nach Ausführung wird auf diese Fläche ein geeigneter Klebstoff oder Leim aufgebracht, der an dem Material, aus dem die jeweilige Seite besteht, gut haftet und bevorzugt eine gewisse Elastizität der Verbindungsstelle ermöglicht. Die Verklebung und Verleimung kann auch mit Hilfe eines weiteren Folienstücks aus gleichem oder anderem Material analog zum Verschweißen erfolgen.

Eine weitere Methode ist das Binden oder Klemmen. Dabei wird die Öffnung durch geeignete Maßnahmen so zusammengequetscht, dass die Folienflächen so dicht wie möglich aneinander liegen. Dies kann beim Binden zum Beispiel durch einen Kabelbinder, festen Faden, Metalldraht oder ähnliches geschehen. Beim Klemmen kann dazu eine Klammer aus Metall, Kunststoff oder einem anderen festen Material eingesetzt werden. Die Klemmung erfolgt dabei zum Beispiel durch eine Feder oder indem die üblicherweise zwei Teile der Klemme durch einen Stift aus beispielweise Kunststoff oder Metall so verbunden werden, dass der Stift an dem einen Teil fest angebracht ist und zum anderen Teil der Klemme verspannt wird und einrastet und so durch die Eigenspannung die Klemme zusammenspannt. Auch eine Schraubklemme ist geeignet, die beim Festschrauben die Folienteile dicht zusammenquetscht.

Bei selbsttragenden Verpackungsformen kann die Öffnung auch in anderer Weise verklemmt werden: Die formstabile Öffnung kann beispielsweise mit einem formstabilen weiteren Stück aus Polymer, Mehrschichtlaminat, Metall oder deren Kombinationen abgedeckt und durch geeignete Befestigungen so auf die Öffnung gedrückt werden, dass diese formschlüssig abgedeckt und abgedichtet wird. Als Befestigung eignen sich zum Beispiel Klammern oder Bügel aus Metall oder ähnlich festen Materialien.

Beim Verschrauben wird die Verpackungsform an der Öffnung mit einem kurzen rohrähnlichen Stück versehen, wobei die Innen- oder Außenseite des Rohres hervorstehende Noppen oder Nasen oder ein Gewinde aufweist. Die Anbringung erfolgt so, dass das rohrähnliche Stück fest und somit gas- und wasserdicht an der Folie angebracht ist. Zum Verschließen wird ein Deckel aufgesetzt, der ebenfalls ein Gewinde oder den Noppen oder Nasen entsprechende Vertiefungen oder Erhöhungen aufweist, so dass der Deckel durch Aufschrauben auf das Gewinde oder Drehen an den Noppen oder Nasen festklemmt wird und so die Öffnung verschließt.

Der Deckel kann dabei zum Beispiel aus einem Polymer, aus einem Mehrschichtlaminat, aus Metall oder einem Verbundmaterial oder deren Kombinationen bestehen. Auch die Verwendung von beispielsweise Kunststoffen als Dichtmaterial im Deckel ist möglich.

Bevorzugt erfolgt das Verschließen bei flexiblen, nicht-selbsttragenden Verpackungsformen durch Kleben, Leimen und Verschweißen. Insbesondere bevorzugt ist das Verschweißen.

Bei selbsttragenden Verpackungsformen wird bevorzugt das Verschrauben, Verkleben und das Verschweißen angewandt. Insbesondere bevorzugt ist das Verschrauben sowie eine Kombination von Verschweißen oder Verkleben mit dem Verschrauben: Die Öffnung wird zuerst durch eine flexible oder nicht-flexible Abdeckung abgedeckt und mit der Verpackungsform verklebt oder verschweißt. Diese Abdeckung ist bevorzugt aus einem Material, das ebenfalls Barriereeigenschaften aufweist. Insbesondere bevorzugt ist ein Material, das wenigstens die gleichen Barriereeigenschaften aufweist wie die für die Verpackungsform verwendete Verbundfolie. Über diese Abdeckung wird dann ein Deckel aufgeschraubt oder geklemmt, der zum einen eine weitere Barriereschicht bedeutet, zum anderen aber auch die Abdeckung vor mechanischen Einwirkungen schützt.

Die Abfüllung des Füllguts in die mit Hilfe der verwendeten Verbundfolien hergestellten Verpackungsformen kann je nach Art des Füllguts erfolgen. Bei der Abfüllung pulverförmiger Polymere erfolgt die Abfüllung so, dass die Verpackungsformen formschlüssig an der Abfüllvorrichtung befestigt werden. Eine solche Befestigung erfolgt vorzugsweise luftdicht, zum einen um das abzufüllende Gut vor Verunreinigungen aus der umgebenden Atmosphäre zu schützen oder um die Sauerstoffzufuhr zu minimieren, zum anderen aber auch um die Umgebung vor Verunreinigungen mit dem Füllgut zu schützen, was sich vor allem bei stark staubenden feinteiligen Füllgütern empfehlen kann. Es ist aber auch möglich, die oxidationsempfindlichen Polymere in flüssiger Form als Lösung oder Dispersion abzufüllen.

Eine flexible Verpackungsform wie zum Beispiel ein Sack oder ein Schlauch ist dabei vorzugsweise so gestaltet, dass die Formschlüssigkeit durch die Flexibilität der Verpackungsform selbst und dessen Anpassung an die Form der Abfüllvorrichtung erreicht werden kann. Alternativ kann die Abfüllvorrichtung flexibel gestaltet sein, um sich beispielsweise an die feste Form der selbstragenden Verpackungsform wie ein Fass oder Behälter anzupassen.

Die Verpackungsformen sind so gestaltet, dass deren Hohlraum im Innern inertisierbar ist. Inertisierung bedeutet dabei den vollständigen oder teilweisen Austausch der Gasphase im Hohlraum durch ein Schutzgas, das dem Füllgut gegenüber inert ist, beispielsweise Stickstoff oder Edelgase. In einer bevorzugten Ausführungsform sind die Verpackungsformen enthaltend Füllgut inertisiert.
Die Inertisierung erfolgt dabei vor, während oder nach Befüllung der Verpackungsform mit dem Füllgut.

Die Abfüllung des Füllguts kann unter normaler Atmosphärenluft erfolgen. Es kann sich aber bei besonders oxidationsempfindlichen Polymeren auch empfehlen unter einer Schutzgasatmosphäre zu arbeiten. Dies kann erfolgen, indem man einen Schutzgasstrom durch die Abfüllungsvorrichtung leitet. Weiterhin können die Verpackungsformen vor der Befüllung mit Schutzgas gespült beziehungsweise unter Schutzgas gesetzt werden. Es kann sich auch empfehlen, die Verpackungsformen vor der Behandlung mit Schutzgas zu evakuieren und dann mit Schutzgas zu befüllen. Dies kann vor oder nach der Befüllung erfolgen.

Zur Inertisierung sind verschiedene Vorgehensweisen möglich.

In einer Ausführungsform wird die Inertisierung erreicht, indem die Verpackungsform vor oder nach dem Befüllen mit dem Füllgut in einem oder mehreren Zyklen aus Evakuieren mit anschließendem Rückbegasen mit Inertgas konditioniert wird.

In einer weiteren Ausführungsform wird die Inertisierung erreicht, indem die Verpackungsform vor oder nach dem Befüllen mit den oxidationsempfindlichen Polymeren in einem oder mehreren Zyklen aus Aufpressen von Inertgas mit anschließendem Entspannen konditioniert wird.

Die beiden Schritte Evakuieren und mit Schutzgas Befüllen sowie die beiden Schritte Aufpressen von Schutzgas und Entspannen können jeweils auch mehrmals hintereinander ausgeführt werden, um einen optimalen Ausschluss von Sauerstoff zu gewährleisten.

In einer anderen Ausführungsform wird die Inertisierung erreicht, indem der Gasraum in der Verpackungsform nach dem Befüllen mit dem Füllgut mit Inertgas gespült wird. Die Dauer des Spülens wird dabei gewählt in Abhängigkeit vom Innenvolumen des Gebindes und dem Gasstrom des Inertgases: Es wird üblicherweise solange gespült, bis mindestens ein Gasvolumen des Inertgases eingesetzt wurde, das der Hälfte des Innenvolumen der Verpackungsform entspricht. Bevorzugt entspricht das verwendete Gasvolumen mindestens dem einfachen, insbesondere bevorzugt mindestens dem 1,5-fachen des Innenvolumens der Verpackungsform.

Wird die Inertisierung der Verpackungsform in einer weiteren Ausführungsform vor dem Befüllen mit dem Füllgut durchgeführt, so wird üblicherweise solange gespült, bis mindestens ein Gasvolumen des Inertgases eingesetzt wurde, das dem Innenvolumen der Verpackungsform entspricht. Bevorzugt entspricht das verwendete Gasvolumen mindestens dem 1,5-fachen, insbesondere bevorzugt mindestens dem zweifachen des Innenvolumens der Verpackungsform.

In einer weiteren Ausführungsform werden die beschriebenen Methoden zur Inertisierung kombiniert und parallel oder zeitlich gestaffelt durchgeführt: Beispielsweise wird die Verpackungsform durch Durchleiten von Schutzgas vor Einfüllen des Füllgutes inertisiert, dann befüllt unter einem Schutzgasstrom und die Verpackungsform enthaltend Füllgut anschließend in ein- oder mehrmalig wiederholten Schritten evakuiert und mit Schutzgas rückbegast. Ebenso kann beispielsweise die Verpackungsform zuerst mit Füllgut befüllt und dann inertisiert werden durch ein- oder mehrmaliges Wiederholen der Schritte Evakuieren und Rückbegasen oder durch ein- oder mehrmaliges Wiederholen der Schritte Aufpressen von Schutzgas und Entspannen.

Allen Methoden zur Inertisierung und deren Kombinationen ist jedoch gemeinsam, dass der Sauerstoffgehalt in Volumenprozent an der Gasphase in der Verpackungsform enthaltend Füllgut kleiner ist als 13 Vol%, bevorzugt kleiner als 12 Vol% und insbesondere bevorzugt kleiner als 10 Vol%. Besonders bevorzugt ist insbesondere, die Sauerstoffkonzentration soweit als möglich zu minimieren. So sind regelmäßig Sauerstoffkonzentrationen von kleiner als 5, bevorzugt kleiner als 3 und insbesondere bevorzugt kleiner als 1 Vol% erreichbar durch Anwendung der beschriebenen Methoden oder Kombinationen dieser Methoden.

Es kann sich auch empfehlen, das Füllgut vor Abfüllung bereits mit einem Schutzgas zu behandeln. Eine solche Behandlung kann bei der Sprühtrocknung, bei der Austragung aus der Sprühvorrichtung, bei der Förderung des Sprühguts oder bei der Zwischenlagerung erfolgen.

Auch flüssiges Füllgut kann vor der Abfüllung bereits mit Schutzgas behandelt werden, beispielsweise bei der Rückbegasung nach Destillation oder bei der Förderung oder bei der Zwischenlagerung.

Als Schutzgase eignen sich alle unter den Verfahrensbedingungen inerten Gase, insbesondere Stickstoff.

Mit Hilfe der erfindungsgemäß verwendeten Verbundfolien und des erfindungsgemäßen Verpackungsverfahrens lassen sich oxidationsempfindliche Polymere mit unerwartet guter Wirkung gegen Peroxid-Aufbau und/ oder Molekulargewichtsabbau stabilisieren.

Als oxidationsempfindliche Polymere bezeichnet der Fachmann alle Polymere, die mit Sauerstoff Reaktionen eingehen können. Als Folge dieser Reaktionen sind im und am Polymeren physikalische und chemische Veränderungen feststellbar. Solche Veränderungen sind dem Fachmann bekannt und können beispielsweise makroskopisch als Verfärbungen und Farbveränderungen und Veränderung der Lösungsviskositäten auftreten und/ oder mikroskopisch als messbare Peroxidgehalte im Polymeren, Veränderungen des Molekulargewichts, Ausbildung von Sauerstoff-haltigen chemischen Gruppen wie OH-, COOH-, CO-Gruppen etc., und ähnliches.

Als Folge der Verwendung der erfindungsgemäßen Verbundfolien und des Verpackungsverfahren können diese mikroskopischen und makroskopischen Effekte verzögert, verringert oder gar komplett vermieden werden.

Die in den erfindungsgemäßen Gebinden enthaltenen oxidationsempfindlichen Polymere zeigen eine unerwartet gute Wirkung gegen Peroxid-Aufbau und/ oder Molekulargewichtsveränderungen.

Weiterhin betrifft die Erfindung Umverpackungen enthaltend die erfindungsgemäßen Gebinde.
Der Schutz der Verpackungsformen enthaltend Füllgut bezüglich oxidativen Effekten wie Peroxidaufbau, Verfärbung und/oder Molekulargewichtsabbau kann noch gesteigert werden, indem die erfindungsgemäßen Gebinde mit einer Umverpackung kombiniert werden.
Die Umverpackung besteht aus einem zwei- oder drei-dimensionalen Material, der das Gebinde umschließt. Beispielsweise handelt es sich bei solchen Umverpackungen um Einschicht- oder Verbundfolien, die um das Gebinde gewickelt werden oder in die das Gebinde eingestellt, eingeklebt oder geschweißt wird. In einer anderen Ausführungsform bestehen die Umverpackungen aus weniger flexiblen Materialien wie Metall, aus einem Faserwerkstoff mit Fasern aus natürlicher und/oder künstlicher Herkunft, aus Holz, aus Polymeren, Polymerlaminaten oder Kombinationen davon.

Die Umverpackungen haben dabei üblicherweise die Form eines Würfels, Quaders oder Zylinders oder diesen angenäherte Formen. Typische Ausführungsformen sind rundliche oder eckige Behälter wie Kartons, Fässer und sonstige dem Fachmann bekannte Formen.

Die Verpackungsformen können entweder nicht, nur lose oder fest mit der Umverpackung verbunden sein.

Sind die Verpackungsformen nicht oder nur lose mit der Umverpackung verbunden, so werden die Verpackungsformen vor, während oder nach dem Befüllen mit Füllgut in die Umverpackung eingebracht.

Sind die Verpackungsformen fest mit der Umverpackung verbunden, so werden die Verpackungsformen bevorzugt vor dem Befüllen mit Füllgut in die Umverpackung eingebracht und aneinander befestigt. Beispielsweise kann ein Foliensack in beispielweise einen Karton fest eingeklebt werden. In einer anderen Ausführungsform ist die Verbundfolie fest mit der Umverpackung verbunden, beispielsweise in einer auch als Saftkarton bekannten Ausführungsform.

Bevorzugt sind die Verpackungsformen nur lose oder nicht mit der Umverpackung verbunden. Insbesondere sind sie nicht mit der Umverpackung verbunden.

Die erfindungsgemäßen Umverpackungen können nicht nur die Schutzwirkung der Verpackungsformen bezüglich oxidativen Effekten wie Peroxidaufbau, Verfärbung und/oder Molekulargewichtsveränderung des Füllgutes verbessern, sondern auch die erfindungsgemäßen Gebinde gegen Einwirkungen von Gasen, Flüssigkeiten, Feststoffen oder mechanischer Krafteinwirkung schützen. Die Umverpackungen erleichtern beispielsweise die Handhabung bei Transport und/oder Lagerung und/oder das Aufbringen von Beschriftungen, Aufdrucken und/oder Aufklebern.

Eine bevorzugte Umverpackung ist aus Kartonage hergestellt wie ein Karton und ein Papierkarton. Weiterhin bevorzugt ist eine Umverpackung in Form eines Fasses, insbesondere eines Deckelfasses.

Die Zeichnungen 1 bis 9 zeigen beispielhaft und nicht einschränkend allgemeine Merkmale der erfindungsgemäßen Verpackungsformen.

Zeichnung 1 zeigt allgemein den typischen Schichtaufbau einer 3-lagigen und einer 4-lagigen Verbundfolie. Nummeriert sind alle vorhandenen Schichten, wobei jedoch die Haftschichten nicht mitgezählt werden bei der Benennung als z.B. "3"-lagige Verbundfolie.
Zeichnung 1 zeigt eine 3-lagige Verbundfolie: Schicht 1 und 5 sind die Außenseiten der Verbundfolie, Schicht 3 die Barriereschicht. Schichten 2 und 4 sind die Haftschichten, die die drei Schichten der Verbundfolie zusammenhalten.

Zeichnung 1 zeigt auch eine 4-lagige Verbundfolie, die aus insgesamt bis zu 7 Schichten besteht: das Vorhandensein einer weiteren zusätzlichen Barriereschicht 3' und eine weitere zusätzliche Haftschicht 2.

Zeigen die Folienschichten genügend Zusammenhalt, etwa durch Adhäsion, so kann auch auf das Einbringen einer, mehrerer oder aller Haftschichten (in der Zeichnung 1 als 2, 4 und 6 bezeichnet) verzichtet werden.

Zeichnung 2 zeigt schematisch als Verpackungsform Folienschlauch einen sogenannten "Flachsack". Dieser wird vor dem Befüllen einseitig verschlossen. Dies kann beispielsweise durch Klebung oder Schweißung erfolgen (Klebe- bzw. Schweißnaht in Zeichnung gestrichelt dargestellt).

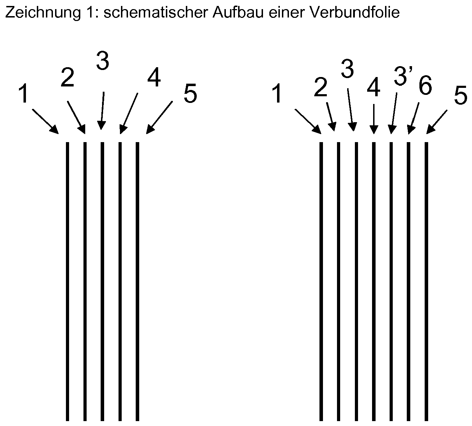

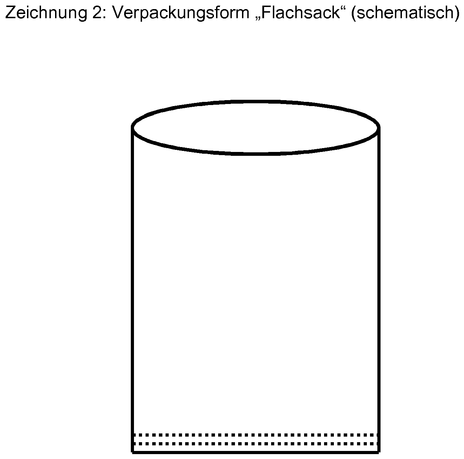

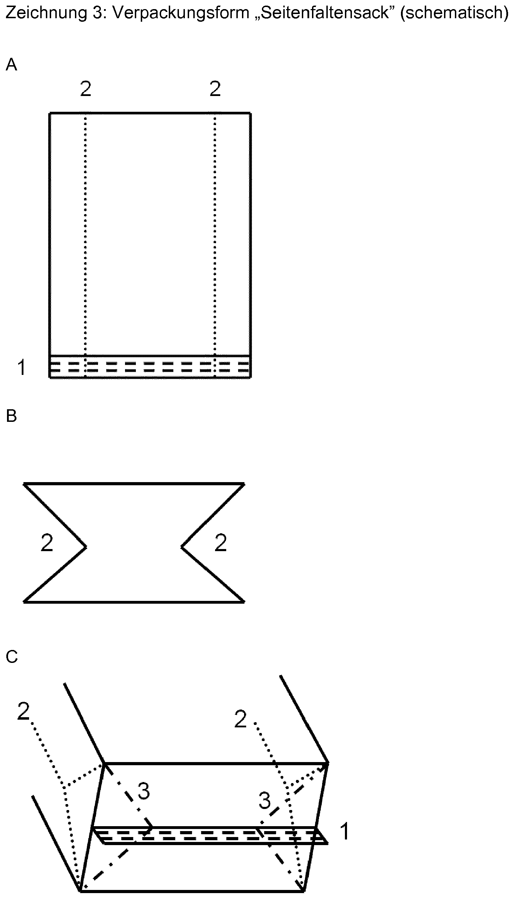

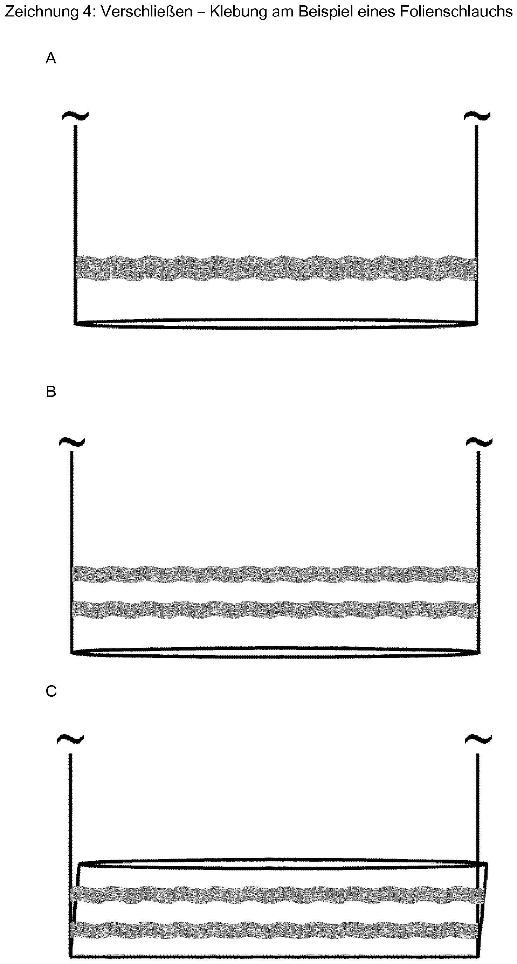

Das Verschließen wird dabei üblicherweise so ausgeführt, dass die Verpackungsform auch nach Einfüllen des Füllgutes unter dessen Gewicht nicht öffnet. Der Verschluss kann etwa durch eine einfache, doppelte oder mehrfache Schweiß- oder Klebenaht oder deren Kombinationen erfolgen.
Nach dem Befüllen wird das noch offene Ende des Folienschlauches üblicherweise ebenfalls verschlossen, etwa ebenfalls durch Kleben, Schweißen, Binden oder Klemmen.
Zeichnung 3 zeigt schematisch einen sogenannten Seitenfaltensack. Abb. 3A zeigt eine Seitenansicht des Sackes, B einen Querschnitt von oben mit geöffnetem Sackteil und C eine Ansicht von unten). Dieser ist aus einer Folie so geschnitten und geschlossen durch etwa Klebung und/oder Schweißung, so dass eine Verpackungsform entsteht, der näherungsweise eckige Ausmaße (im Querschnitt gesehen) ausbilden kann. 1 in den Abbildungen 3A bis 3C gestrichelt dargestellt, zeigt durch Schweißung oder Klebung bedingte Verschlussstellen. 2 gepunktet dargestellt, zeigt eine Seitenfalte. Bei 3 durch Strichpunkte verdeutlicht handelt es sich um die Bodenfaltung (hier innenliegend).
Durch eine solche Formgebung können solche Säcke meist auch gut flach gefaltet werden. Der besondere Vorteil einer solchen Formgebung ist darüber hinaus, dass diese Verpackungsform sich eckigen Umgebungen wie insbesondere eckigen Umverpackungen, beispielsweise Kartons, gut anpasst und so das Innenvolumen der Umverpackung so gut wie möglich ausgenützt wird. Dadurch kann die Füllmenge in der gewählten Verpackung (üblicherweise bestehend aus Verpackungsform und Umverpackung) maximiert werden.
Ein solcher Seitenfaltensack kann auch mit einem ovalen bis runden Querschnitt statt eckigem Querschnitt hergestellt werden. Somit passen sich solche Seitenfaltensäcke sehr gut ovalen bis runden Behältnissen und Umverpackungen an wie Eimer oder Fässer.
Bevorzugt weist ein Seitenfaltensack jedoch einen eckigen oder näherungsweise eckigen Querschnitt auf.

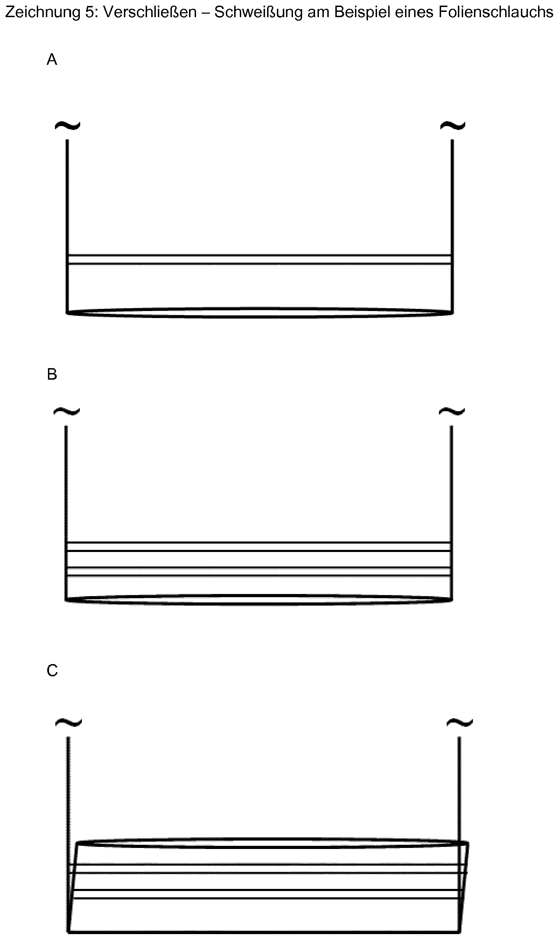

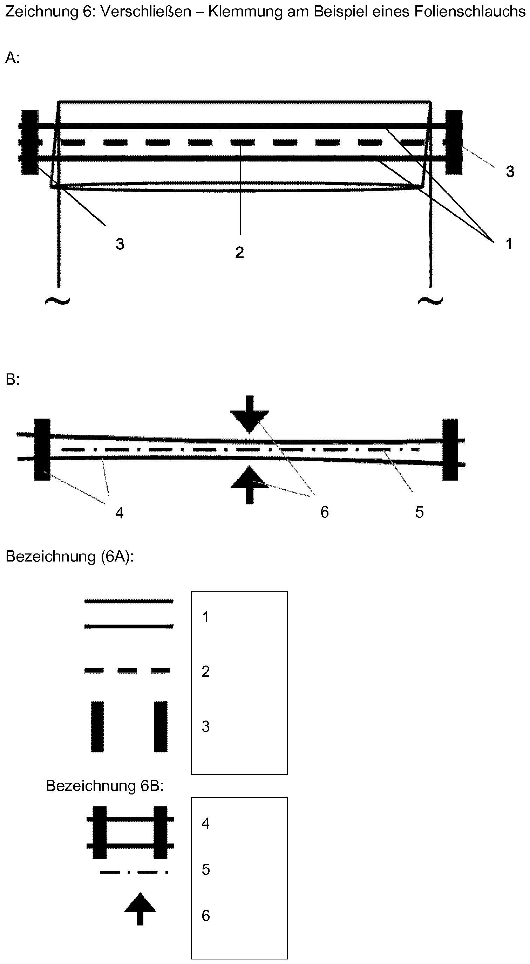

Zeichnungen 4 und 5 zeigen beispielhafte Ausführungsformen des Verschließens in Form von Klebung und Schweißung, wobei die mit 4A bezeichnete Zeichnung den Verschluss durch einfache Klebung, die mit 4B Gekennzeichnete den Verschluss mit zweifacher Klebung und die mit 4C gekennzeichnete Zeichnung den Verschluss durch zweifache Klebung mit Umschlag darstellt. In den Abbildungen 5A bis 5C ist entsprechend der Verschluss durch einfache Schweißung (5A), durch zweifache Schweißung (5B) und in Zeichnung 5C der Verschluss durch zweifache Schweißung mit Umschlag gezeigt.
Zeichnung 6 veranschaulicht beispielhafte Ausführungsformen des Klemmens, wobei Zeichnung 6A eine Seitenansicht und 6B eine Aufsicht zeigt. Die Bezeichnung 1 der Zeichnung 6A zeigt auf die Vorderseite der Klemme, 2 auf deren Rückseite. 3 zeigt auf die beiden Klemmenbefestigungen (Vorder- und Rückseite). 6B zeigt wie der Folienschlauch (5) durch Klemmung (6) (Druck gegen den Folienschlauch unter Verwendung einer Klemme (4) verschlossen wird.
Die gezeigte Form der Klemme ist nur eine beispielhafte Form der dem Fachmann bekannten Formen.

Zeichnung 7 zeigt eine beispielhafte Ausführungsform des Verschließens mittels Gewinde.

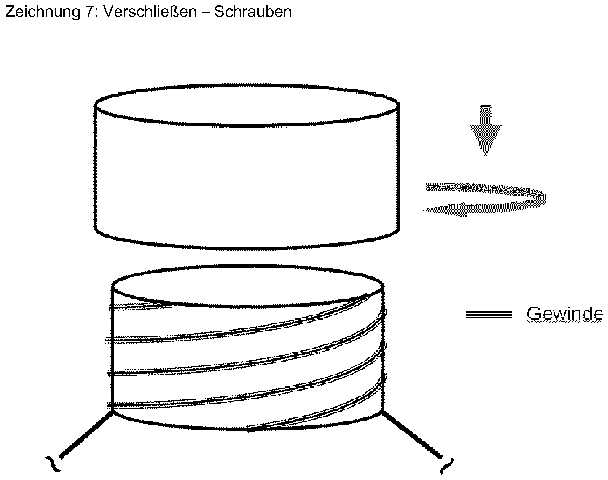

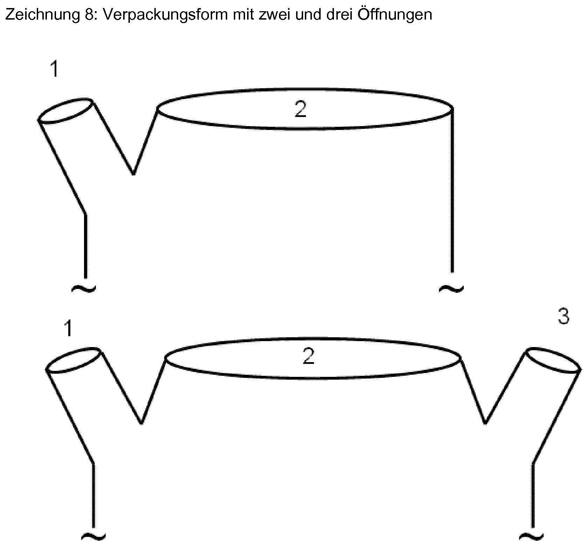

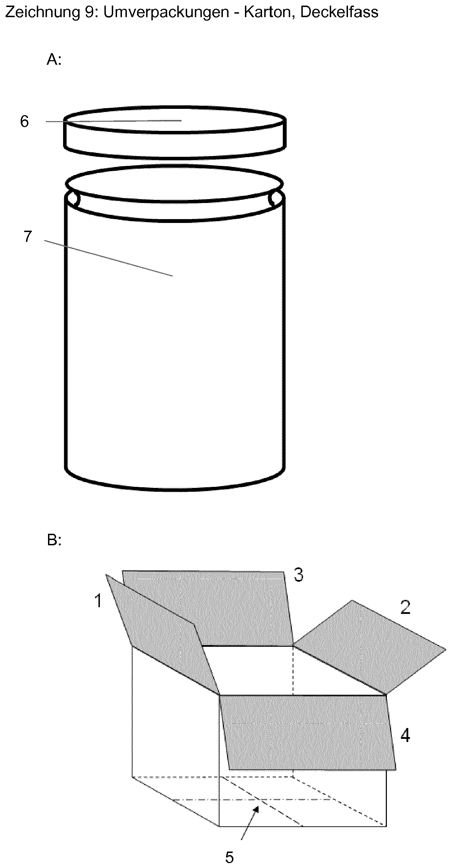

Das Schließen erfolgt durch Aufsetzen des Deckels auf das Gewinde und Drehen in der Richtung des Gewindes (in Abbildung 7 exemplarisch gezeigt für ein Gewinde, das durch Drehung im Uhrzeigersinn (nach rechts) schließt), bis der Deckel fest auf dem Gewinde sitzt. Im Deckel befindet sich innen liegend zweckmäßigerweise eine Dichtung, die bei festsitzendem Deckel die Verpackungsform dicht schließt.

Zeichnung 8 zeigt beispielhaft zwei Verpackungsformen mit zwei bzw. drei Öffnungen, in der Zeichnung mit 1, 2, 3 bezeichnet

Diese Öffnungen können etwa zur Befüllung oder zum Entleeren des Füllguts sowie zum Ein- und/oder Ausleiten von Gasströmen dienen. Ist eine der Öffnungen größer als die anderen, so dienen üblicherweise jeweils die größere Öffnung zum Befüllen oder Entleeren des Füllgutes und die kleineren Öffnungen für das Ein- und/oder Ausleiten von Gasströmen. Die Gasströme können neben dem Gas natürlich auch noch Teile von Füllgut enthalten, das mit dem Gas ein- oder ausgetragen wird.
Die Zahl der Öffnungen und deren Verwendung sind nicht beschränkt, jedoch ist mindestens eine Öffnung vorhanden. Zweckmäßigerweise sind nicht mehr als drei Öffnungen vorhanden. Eine Öffnung dient dabei typischerweise zur Befüllung oder Entleeren des Füllguts. Eine weitere oder beide weiteren Öffnungen dienen üblicherweise zum Ein- und/oder Ausleiten von Gasströmen.
So kann beispielsweise das Füllgut in die Verpackungsform durch eine Öffnung eingefüllt werden. Das eventuell in der Verpackungsform vorhandene Gasvolumen kann durch eine weitere Öffnung während des Füllvorgangs entweichen. Dadurch kann beispielsweise die Staubentwicklung an der Einfüllöffnung verringert oder gar vermieden werden. Die zweite oder auch die dritte Öffnung oder beide können auch dazu genutzt werden, Schutzgas einzuleiten. Dies dient etwa zur Inertisierung des Gasraumes der Verpackungsform. Andererseits kann ein Gastrom auch genutzt werden, um beim Abfüllen entstehenden Staub des Füllgutes abzuleiten. Zur Ableitung kann beispielsweise die dritte Öffnung dienen.
Bei dem beispielhaft in Zeichnung 8 gezeigten Verpackungsform mit den Öffnungen 1, 2 und 3 wird zweckmäßigerweise die Öffnung 2 zum Befüllen und Entleeren des Füllgutes verwendet. Öffnungen 1 und 3 werden zweckmäßigerweise für Gasstrom verwendet.

Zeichnung 9 zeigt beispielhaft zwei Umverpackungen in Form eines Kartons sowie in Form eines Deckelfasses.

Beim Karton (B) besteht die untere Seite (der Boden (5)) aus zwei bis vier Klappen, die übereinander gelegt und aneinander und/oder an den Seitenwänden des Kartons befestigt werden. Die Befestigung kann beispielsweise durch Kleben oder Klammern erfolgen. Das obere Ende (der Deckel) wird nach dem Einbringen der Verpackungsform und Befüllen mit Füllgut oder nach Einbringen des gefüllten Gebindes - analog zum Boden - aus zwei bis vier Teilen (in der Figur als 1 bis 4 durchnummeriert) gefaltet und befestigt und somit geschlossen.
Werden für Boden und/oder Deckel nur zwei Klappen verwendet, so entfallen zweckmäßigerweise die in Zeichnung 9 mit 1 und 2 bezeichneten Klappen.
Prinzipiell können statt 2 oder 4 Klappen auch mehr Klappen verwendet werden. Die Zahl der Klappen korreliert zweckmäßigerweise mit dem Querschnitt des Kartons: Bei viereckigen Kartons setzt der Fachmann üblicherweise zwei oder vier Klappen ein. Bei 5-eckigen fünf, bei sechseckigen sechs oder drei Klappen usw.

Das Deckelfaß (A) weist im Deckel zweckmäßigerweise eine Dichtung auf, die beim Aufsetzen des Deckels (6) auf das Faß (7) das innere Volumen (den Innenraum) des Fasses nach außen abschließt. Die Befestigung des Deckels erfolgt durch geeignete, dem Fachmann bekannte Mittel wie Ringe oder Klemmen. Der Deckel kann durch geeignete Formgestaltung sich auch selbst auf der Fassöffnung festklemmen.

Solche und andere geeignete und dem Fachmann bekannte Umverpackungen wie Bigbags, also größere Behälter meist in Sackform und oft aus Gewebe hergestellt, Container in jedweder Form, Eimer usw. sind dem Fachmann bekannt und eignen sich prinzipiell ebenso.

### Beispiele:

Alle verwendeten Folien erfüllen die neuesten derzeit gültigen Vorschriften der deutschen, europäischen und US-amerikanischen Behörden und Institutionen zur Verpackung von Pharmazeutischen Produkten, Nahrungsmitteln etc, wie die europäische Pharmacopöe, die Regeln der US-amerikanischen FDA oder den deutschen Richtlinien zu Verpackungen.

### Verpackungsform 1 (Folie 1)und Verpackungsform 2 (Folie 2) (erfindungsgemäße Ausführungsformen):

Coextrudierte Folien in Form eines flexiblen, nicht-selbsttragenden Foliensackes Barriereschicht: EVOH-Polymer, Dicke 15 µm (+-3µm Toleranz)
Haftkleber: Maleinsäureanhydrid-modifiziertes Polyethylen, Adoma SF 700, Mitsui Petrochemical Industries
EVOH: EVAL™ F (der Firma Kuraray, Japan)
Polyethylen: LDPE
Die an der Außenseite antistatisch ausgerüsteten Foliensäcke wiesen die Form von Seitenfaltensäcken auf. Die Schlauchhülle war am Boden geschweißt (im Bereich von 10 bis 20 mm oberhalb der unteren Schlauchkante).
Gesamttoleranz der Foliendicke: +-8% (nach DIN 53.370)

### Verpackungsform 1:

Schichtdicke: 150µm Dicke
Schichtaufbau: Polyethylen/Haftschicht/EVOH/Haftschicht/Polyethylen
Schichtdicken[µm]: 50/16,5/15/16,5/50 (Produktseite)
Dimension: 950mm lang, 390mm breit, 300 mm breite Falte, Seitenfaltensack

### Verpackungsform 2:

Schichtdicke: 300µm Dicke
Schichtaufbau: Polyethylen/Haftschicht/EVOH/Haftschicht/Polyethylen
Schichtdicken [µm]: 145/10/15/10/120 (Produktseite)
Dimension: 950mm lang, 390mm breit, 300 mm breite Falte, Seitenfaltensack

### Vergleichsbeispiel: Verpackungsformen 3 und 4; Aluminium-PE-Laminat-Folien Gemeinsames Aufbau-Prinzip:

Die laminierte Schicht (äußere Hülle) bestand aus Aluminium/ Haftschicht/Polyester/ Haftschicht/PE. Die folgende innere, produktberührende Schicht PE war ein nichtlaminierter Film (innere Hülle). Diese innere Hülle wurde in die äußere Hülle eingelegt; beide Hüllen wurden am unteren Ende gemeinsam abgeschweißt (im Bereich von 10 bis 20 mm oberhalb der unteren Schlauchkante). Am oberen Ende der Schlauchkante wurden die beiden Hüllen durch 10 in gleichmäßigem Abstand verteilte, in Richtung von der unteren zur oberen Schlauchkante ausgeführte, 10 bis 15 cm lange Streifen eines Klebstoffs aneinander befestigt. Die feste Verbindung beider Folien am oberen Schlauchende erfolgte nach dem Abfüllen des Produktes durch das Verschweißen des Sacks am oberen Schlauchende.
Die Foliensäcke wiesen die Form von sogenannten Seitenfaltensäcken auf.

### Verpackungsform 3: (Folie 3)

Schichtdicke: 0,224 mm
Barriereschicht: Aluminium
Äußere Hülle (äußere Folie): Schichtaufbau: Aluminium/ Haftschicht/Polyester/ Haftschicht/PE
Schichtdicken [µm]: 12/20/12/20/80
Innere Hülle (innere Folie): Polyethylen: LDPE 80 µm (Produktseite)
Haftschicht: natürliche Basis
Dimension: 950mm lang, 390mm breit, 300mm breite Falte, Seitenfaltensack

### Verpackungsform 4: (Folie 4)

Schichtdicke: 0,264 mm
Barriereschicht: Aluminium
Äußere Hülle (äußere Folie): Schichtaufbau: Aluminium/ Haftschicht/Polyester/ Haftschicht/PE
Schichtdicken [µm]: 12/20/12/20/100
Innere Hülle (innere Folie): Polyethylen: LDPE 100 µm (Produktseite)
Haftschicht: natürliche Basis
Dimension: 950mm lang, 385mm breit, 300mm breite Falte, Seitenfaltensack

### Vergleichsbeispiel:

Verpackungsform 5: Polyethylen-Folie, Dicke 0,15 mm
Barriereschicht: ohne
Schichtaufbau: Polyethylen
Schichtdicke [µm]: 150
Polyethylen: HDPE
Dimension: 1000mm lang, 380mm breit, 300mm breite Falte, Seitenfaltensack

Alle Verpackungsformen 1 bis 4 wurden in einen Papierkarton als Umverpackung, Verpackungsform 5 in ein HD-PE-Fass mit gedichtetem Deckel (Elastomerdichtung im Innenrand) eingebracht, befüllt, evakuiert und danach mit Schutzgas begast, verschweißt und anschließend im Karton bzw. dem mit dem Deckel verschlossenen Fass bei den angegebenen Lagerbedingungen für die angegebene Dauer gelagert. Es wurden dabei so viele Gebinde eingelagert, wie Messzeitpunkte vorgesehen waren: Zu jedem Messzeitpunkt wurde dann ein seit der Abfüllung bis zur Messung niemals geöffnetes Gebinde verwendet, um eine Kontamination oder Verfälschung durch Öffnen und Wiederverschließen zu vermeiden.

Es wurde der Initialwert an Peroxiden nach der Abfüllung beziehungsweise nach Lagerung nach der jeweils angegebenen Anzahl von Monaten bestimmt. Die Bestimmung des Peroxidgehalts erfolgte durch UV-photometrische Bestimmung gemäß der Titanylsulfat-Methode, wie sie beispielsweise in der Ph.Eur. 6 beschrieben ist. Zum Vergleich wurde der Peroxidgehalt von Material bestimmt, das in reinen Polyethylensäcken beziehungsweise in Säcken aus Aluminium/Polyethylen-Folien gelagert wurde.

Die Lagerung erfolgte bei Raumbedingungen mit 25 ° C und 60 % relativer Feuchte (r.F.), bei 30 °C und 70 % relativer Feuchte und bei 45 °C und 75 % relativer Feuchte. Als Vergleich wurden Proben in Aluminium-PE-Foliensäcken auch bei 5°C gelagert.

In den nachstehenden Tabellen sind die Ergebnisse im Einzelnen aufgeführt.

### 1) Polyvinylpyrrolidon, K-Wert 30, festes Pulver

### Erfindungsgemäße Beispiele: Verpackungsform 2

| Beispiel Nr. | Lagerdauer [Monate] bei 30°C/70%r.F. | | | | | |
|---|---|---|---|---|---|---|
| Monate | 0 | 1 | 3 | 6 | 9 | 12 |
| 1 | 24 | | 54 | 40 | 39 | 31 |
| 2 | 37 | | 44 | 18 | 31 | 35 |
| 3 | 33 | | 80 | 29 | 38 | 39 |

| | Lagerdauer [Monate] bei 45°C/75%r.h. | | | | | |
|---|---|---|---|---|---|---|
| Monate | 0 | 1 | 3 | 6 | 9 | 12 |
| 4 | 24 | 63 | 37 | 23 | 25 | 20 |
| 5 | 37 | 55 | 33 | 21 | 20 | 16 |
| 6 | 33 | 37 | 40 | 43 | 22 | 20 |

### Vergleichsbeispiele: Verpackungsform 3

| Vergleichsbeispiel Nr. | Lagerdauer [Monate] bei 25°C/70%r.F. | | | | | |
|---|---|---|---|---|---|---|
| Monate | 0 | 1 | 3 | 6 | 9 | 12 |
| 7 | 80 | | 90 | 100 | 130 | 130 |
| 8 | 70 | | 164 | 193 | 197 | 202 |
| 9 | 60 | | 175 | 204 | 210 | 212 |
| 10 | 50 | | 159 | 176 | 181 | 175 |
| 11 | 92 | | | 161 | | 128 |
| 12 | 75 | | | | | 156 |

| | Lagerdauer [Monate] bei 45°C/75%r.F. | | | | | |
|---|---|---|---|---|---|---|
| Monate | 0 | 1 | 3 | 6 | 9 | 12 |
| 13 | 80 | | 130 | 150 | 170 | 150 |
| 14 | 70 | 147 | 236 | 255 | 233 | 197 |
| 15 | 60 | 131 | 229 | 507 | 247 | 209 |
| 16 | 50 | 149 | 200 | 196 | 216 | 199 |

### Vergleichsbeispiele: Verpackungsform 5

| Vergleichsbeispiel Nr. | Lagerdauer [Monate] bei 25 °C, 60 % r.F. Peroxidgehalte in [ppm] | | | |
|---|---|---|---|---|
| Monate | 0 | 3 | 6 | 12 |
| 17 | 42 | 202 | 214,4 | 252 |
| 18 | 94 | 259 | 290 | 255 |
| 19 | 78 | 211 | 235 | 132 |
| 20 | 67 | 164 | 196 | 241 |
| 21 | 25 | 140 | 242 | 340 |
| 22 | 43 | 126 | 222 | 265 |
| 23 | 37 | 135 | 175 | 266 |

| Vergleichsbeispiel Nr. | Lagerdauer [Monate] bei 45 °C, 75 % r.F. Peroxidgehalte in [ppm] | | | | | | |
|---|---|---|---|---|---|---|---|
| Monate | 0 | 1 | 2 | 3 | 4 | 5 | 6 |
| 24 | 130 | 284 | 228 | 233 | 250 | 229 | 254 |

### 2) Polyvinylpyrrolidon, K-Wert 25, festes Pulver

### Erfindungsgemäße Beispiele: Verpackungsform 2

| Beispiel Nr. | Lagerdauer [Monate] bei 30 °C, 70 % r.F.; Peroxidgehalte in [ppm] | | | | | |
|---|---|---|---|---|---|---|
| Monate | 0 | 3 | 6 | 9 | 12 | 18 |
| 25 | 61 | 45 | <20 | 36 | 24 | 29 |

| | Lagerdauer [Monate] bei 45 °C, 75 % r.F.; Peroxidgehalte in [ppm] | | | | | |
|---|---|---|---|---|---|---|
| Monate | 0 | 3 | 6 | 9 | 12 | 18 |
| 26 | 61 | 28 | 37 | 20 | <20 | n.b. |

Die Peroxidgehalte bleiben auf einem sehr niedrigen Niveau mit einem niedrigen Spitzenwert.

### Verleichsbeisiele: Verpackungsform 3

| Beispiel Nr. | Lagerdauer [Monate] bei 25 °C, 65 % r.F.; Peroxidgehalte in [ppm] | | | | | |
|---|---|---|---|---|---|---|
| Monate | 0 | 3 | 6 | 9 | 12 | 18 |
| 25 | 180 | 180 | n.b. | 190 | 166 | 227 |

| | Lagerdauer [Monate] bei 45 °C, 75 % r.F.; Peroxidgehalte in [ppm] | | | | | |
|---|---|---|---|---|---|---|
| Monate | 0 | 3 | 6 | 9 | 12 | 18 |
| 26 | 180 | 170 | 170 | 170 | 239 | 140 |

### 3) Polyvinylpyrrolidon, K-Wert 90, festes Pulver

### Erfindungsgemäße Beispiele: Verpackungsform 2

| Beispiel Nr. | Lagerdauer [Monate] bei 30 °C, 70 % r.F.; Peroxidgehalte in [ppm] | | | | | |
|---|---|---|---|---|---|---|
| Monate | 0 | 3 | 6 | 9 | 12 | 18 |
| 27 | 69 | 74 | 53 | 54 | 47 | 42 |

| | Lagerdauer [Monate] bei 45 °C, 75 % r.F.; Peroxidgehalte in [ppm] | | | | | |
|---|---|---|---|---|---|---|
| Monate | 0 | 1 | 3 | 6 | 9 | 12 |
| 28 | 69 | 59 | 60 | 41 | 39 | 31 |

| Beispiel Nr. | Lagerdauer [Monate] bei 30 °C, 70 % r.F.; K-Werte [ohne Einheit] | | | | | |
|---|---|---|---|---|---|---|
| Monate | 0 | 3 | 6 | 9 | 12 | 18 |
| 27 | 91,8 | 91,0 | 92,2 | 92,4 | 92,7 | 92,4 |

| | Lagerdauer [Monate] bei 45 °C, 75 % r.F.; K-Werte [ohne Einheit] | | | | | |
|---|---|---|---|---|---|---|
| Monate | 0 | 1 | 3 | 6 | 9 | 12 |
| 28 | 91,8 | 92,0 | 91,6 | 92,1 | 92,5 | 92,1 |

Die Peroxidgehalte bleiben auf einem sehr niedrigen Niveau mit einem niedrigen Spitzenwert. Die K-Werte sind sehr konstant (weit innerhalb der Messgenauigkeit).

### Vergleichsbeispiele: Verpackungsform 4

| Beispiel Nr. | Lagerdauer [Monate] bei 5 °C; Peroxidgehalte in [ppm] | | | | | |
|---|---|---|---|---|---|---|
| Monate | 0 | 3 | 6 | 9 | 12 | 18 |
| 29 | 107 | 127 | 150 | 100 | 103 | 100 |

| | Lagerdauer [Monate] bei 25 °C, 65 % r.F.; Peroxidgehalte in [ppm] | | | | | |
|---|---|---|---|---|---|---|
| Monate | 0 | 3 | 6 | 9 | 12 | 18 |
| 30 | 107 | 123 | 110 | 103 | 220 | 100 |

| | Lagerdauer [Monate] bei 45 °C, 75 % r.F.; Peroxidgehalte in [ppm] | | | | | |
|---|---|---|---|---|---|---|
| Monate | 0 | 2 | 3 | 6 | 9 | 12 |
| 31 | 107 | 90 | 157 | 290 | 73 | 53 |

| Beispiel Nr. | Lagerdauer [Monate] bei 5 °C; K-Werte [ohne Einheit] | | | | | |
|---|---|---|---|---|---|---|
| Monate | 0 | 3 | 6 | 9 | 12 | 18 |
| 29 | 91,6 | 91,1 | 91,8 | 92,2 | 92,0 | 91,0 |

| | Lagerdauer [Monate] bei 25 °C, 65 % r.F.; K-Werte [ohne Einheit] | | | | | |
|---|---|---|---|---|---|---|
| Monate | 0 | 3 | 6 | 9 | 12 | 18 |
| 30 | 91,6 | 91,0 | 91,4 | 91,2 | 88,0 | 91,4 |

| | Lagerdauer [Monate] bei 45 °C, 75 % r.F.; K-Werte [ohne Einheit] | | | | | |
|---|---|---|---|---|---|---|
| Monate | 0 | 2 | 3 | 6 | 9 | 12 |
| 31 | 91,6 | 91,5 | 89,3 | 87,1 | 92,4 | 92,9 |

Die Peroxidgehalte steigen deutlich an, insbesondere bei 25°C und 45°C mit einem hohen Spitzenwert. Der Peroxidgehalt-Abfall bei Lagerung bei 45°C ist deutlich. Ausfallerscheinungen sind beim K-Wert zu sehen, wo einzelne Verpackungsform einen deutlich erniedrigten K-Wert aufweisen, der aus Molmassenabbau durch Oxidation des PVP resultiert.

### 4) Polytetrahydrofuran, Molmasse 3200 g/mol

### Erfindungsgemäße Beispiele: Verpackungsform 1

| Beispiel Nr. | Lagerdauer [Monate] bei 25 °C, 65 % r.F.; Peroxidgehalte in [ppm] | | | | | |
|---|---|---|---|---|---|---|
| Monate | 0 | 3 | 6 | 9 | 12 | 18 |
| 32 | 41 | 52 | 61 | 53 | 39 | 31 |

| | Lagerdauer [Monate] bei 45 °C, 75 % r.F.; Peroxidgehalte in [ppm] | | | | | |
|---|---|---|---|---|---|---|
| Monate | 0 | 3 | 6 | 9 | 12 | 18 |
| 33 | 41 | 65 | 72 | 61 | 45 | 38 |

### Vergleichsbeispiele: Verpackungsform 3

| Beispiel Nr. | Lagerdauer [Monate] bei 25 °C, 65 % r.F.; Peroxidgehalte in [ppm] | | | | | |
|---|---|---|---|---|---|---|
| Monate | 0 | 3 | 6 | 9 | 12 | 18 |
| 34 | 95 | 156 | 194 | 221 | 253 | 286 |

| | Lagerdauer [Monate] bei 45 °C, 75 % r.F.; Peroxidgehalte in [ppm] | | | | | |
|---|---|---|---|---|---|---|
| Monate | 0 | 3 | 6 | 9 | 12 | 18 |
| 35 | 95 | 173 | 201 | 243 | 255 | 246 |

### 5) Polyethylenglykol, Molmasse 9000 g/mol

### Erfindungsgemäße Beispiele: Verpackungsform 2

| Beispiel Nr. | Lagerdauer [Monate] bei 25 °C, 65 % r.F.; Peroxidgehalte in [ppm] | | | | | |
|---|---|---|---|---|---|---|
| Monate | 0 | 3 | 6 | 9 | 12 | 18 |
| 36 | 23 | 48 | 62 | 71 | 61 | 36 |

| | Lagerdauer [Monate] bei 45 °C, 75 % r.F.; Peroxidgehalte in [ppm] | | | | | |
|---|---|---|---|---|---|---|
| Monate | 0 | 3 | 6 | 9 | 12 | 18 |
| 37 | 23 | 58 | 73 | 67 | 51 | 29 |

### Vergleichsbeispiele: Verpackungsform 4

| Beispiel Nr. | Lagerdauer [Monate] bei 25 °C, 65 % r.F.; Peroxidgehalte in [ppm] | | | | | |
|---|---|---|---|---|---|---|
| Monate | 0 | 3 | 6 | 9 | 12 | 18 |
| 38 | 51 | 76 | 89 | 102 | 143 | 176 |

| | Lagerdauer [Monate] bei 45 °C, 75 % r.F.; Peroxidgehalte in [ppm] | | | | | |
|---|---|---|---|---|---|---|
| Monate | 0 | 3 | 6 | 9 | 12 | 18 |
| 39 | 51 | 87 | 113 | 126 | 143 | 101 |

### 6) Propfpolymer aus 25 Gew.-% Polyethylenglykol und 75 Gew.-% Polyvinylalkohol, Alkoholzahl 30 mg KOH/g, festes Pulver

### Erfindungsgemäße Beispiele: Verpackungsform 2

| Beispiel Nr. | Lagerdauer [Monate] bei 25 °C, 65 % r.F.; Peroxidgehalte in [ppm] | | | | | |
|---|---|---|---|---|---|---|
| Monate | 0 | 3 | 6 | 9 | 12 | 18 |
| 40 | 35 | 53 | 62 | 54 | 49 | 36 |

| | Lagerdauer [Monate] bei 45 °C, 75 % r.F.; Peroxidgehalte in [ppm] | | | | | |
|---|---|---|---|---|---|---|
| Monate | 0 | 3 | 6 | 9 | 12 | 18 |
| 41 | 35 | 67 | 72 | 62 | 48 | 29 |

### Vergleichsbeispiele: Verpackungsform 5

| Beispiel Nr. | Lagerdauer [Monate] bei 25 °C, 65 % r.F.; Peroxidgehalte in [ppm] | | | | | |
|---|---|---|---|---|---|---|
| Monate | 0 | 3 | 6 | 9 | 12 | 18 |
| 42 | 65 | 105 | 163 | 190 | 214 | 254 |

| | Lagerdauer [Monate] bei 45 °C, 75 % r.F.; Peroxidgehalte in [ppm] | | | | | |
|---|---|---|---|---|---|---|
| Monate | 0 | 3 | 6 | 9 | 12 | 18 |
| 43 | 65 | 123 | 181 | 225 | 249 | 276 |

### 7) Polyamid: 1,6-Hexandisäure mit 3-Methyl-1,5-Pentadiamin

### Erfindungsgemäße Beispiele: Verpackungsform 1

| Beispiel Nr. | Lagerdauer [Monate] bei 25 °C, 65 % r.F.; Peroxidgehalte in [ppm] | | | | | |
|---|---|---|---|---|---|---|
| Monate | 0 | 3 | 6 | 9 | 12 | 18 |
| 44 | 80 | 102 | 121 | 130 | 129 | 103 |

### Vergleichsbeispiele: Verpackungsform 5

| Beispiel Nr. | Lagerdauer [Monate] bei 25 °C, 65 % r.F.; Peroxidgehalte in [ppm] | | | | | |
|---|---|---|---|---|---|---|
| Monate | 0 | 3 | 6 | 9 | 12 | 18 |
| 45 | 80 | 152 | 187 | 243 | 291 | 358 |

### 8) Polyvinylpyrrolidon, wasserunlöslich quervernetzt (Popcorn-Polymer), festes Pulver Erfindungsgemäße Beispiele: Verpackungsform 1

| Beispiel Nr. | Lagerdauer [Monate] bei 30 °C, 75 % r.F.; Peroxidgehalte in [ppm] | | | | | |
|---|---|---|---|---|---|---|
| Monate | 0 | 3 | 6 | 9 | 12 | 18 |
| 46 | 36 | 45 | 54 | 60 | 37 | <20 |

| | Lagerdauer [Monate] bei 45 °C, 75 % r.F.; Peroxidgehalte in [ppm] | | | | | |
|---|---|---|---|---|---|---|
| Monate | 0 | 3 | 6 | 9 | 12 | 18 |
| 47 | 36 | 68 | 72 | 53 | 31 | <20 |

### Vergleichsbeispiele: Verpackungsform 3

| Beispiel Nr. | Lagerdauer [Monate] bei 25 °C, 65 % r.F.; Peroxidgehalte in [ppm] | | | | | |
|---|---|---|---|---|---|---|
| Monate | 0 | 3 | 6 | 9 | 12 | 18 |
| 48 | 56 | 102 | 135 | 173 | 186 | 214 |

| | Lagerdauer [Monate] bei 45 °C, 75 % r.F.; Peroxidgehalte in [ppm] | | | | | |
|---|---|---|---|---|---|---|
| Monate | 0 | 3 | 6 | 9 | 12 | 18 |
| 49 | 56 | 124 | 141 | 208 | 276 | 257 |

### 9) Poly(vinylpyrrolidon-co-vinylacetat), K-Wert 38, Gewichtsverhältnis Vinylpyrrolidon zu Vinylacetat = 60:40

### Erfindungsgemäße Beispiele: Verpackungsform 2

| Beispiel Nr. | Lagerdauer [Monate] bei 30 °C, 75 % r.F.; Peroxidgehalte in [ppm] | | | | | |
|---|---|---|---|---|---|---|
| Monate | 0 | 3 | 6 | 9 | 12 | 18 |
| 50 | 34 | 42 | 41 | 42 | 37 | <20 |

| | Lagerdauer [Monate] bei 45 °C, 75 % r.F.; Peroxidgehalte in [ppm] | | | | | |
|---|---|---|---|---|---|---|
| Monate | 0 | 3 | 6 | 9 | 12 | 18 |
| 51 | 34 | 58 | 65 | 60 | 28 | <20 |

### Vergleichsbeispiele: Verpackungsform 3

| Beispiel Nr. | Lagerdauer [Monate] bei 25 °C, 65 % r.F.; Peroxidgehalte in [ppm] | | | | | |
|---|---|---|---|---|---|---|
| Monate | 0 | 3 | 6 | 9 | 12 | 18 |
| 52 | 54 | 72 | 89 | 104 | 138 | 169 |

| | Lagerdauer [Monate] bei 45 °C, 75 % r.F.; Peroxidgehalte in [ppm] | | | | | |
|---|---|---|---|---|---|---|
| Monate | 0 | 3 | 6 | 9 | 12 | 18 |
| 53 | 54 | 91 | 126 | 157 | 183 | 142 |

## Patentansprüche

1. Verwendung von Verbundfolien, enthaltend Barriereschichten auf Basis von Copolymeren aus Ethylen und Vinylalkohol, als Verpackungsmaterial für oxidationsempfindliche Polymere, die (i) Homo- und Copolymere von N-Vinylverbindungen, wasserlösliche und wasserunlöslich vernetzte Homo- und Copolymere von Vinylpyrrolidon, Vinylpyrrolidon-Vinylacetat-Copolymere, Vinylacetat-enthaltende Polyether-Pfropfpolymere, Polyamide oder Polyether, (ii) Mischungen von zwei oder mehreren dieser Polymeren oder (iii) Mischungen enthaltend eines oder mehrere dieser Polymere sind, wobei die Verbundfolien und die daraus hergestellten, Füllgut enthaltenden Verpackungsformen mindestens drei Schichten aufweisen, wobei mindestens eine Trägerschicht und mindestens eine Barriereschicht vorgesehen sind, und wobei das Füllgut aus oxidationsempfindlichen Polymeren und gegebenenfalls Schutzgas besteht.

2. Verwendung nach Anspruch 1, wobei die Verbundfolien Trägerschichten aus Polyestern, Polyamid, Polyvinylchlorid, Zellglas oder Polyolefinen enthalten.

3. Verwendung nach Anspruch 1 und 2, wobei die Verbundfolien Haftschichten enthalten.

4. Verwendung nach einem der Ansprüche 1 bis 3, wobei die Verbundfolien Haftschichten auf Basis von Maleinsäure- oder Maleinsäureanhydrid-modifizierten Ethylen-Vinylacetat-Copolymeren enthalten.

5. Verwendung nach einem der Ansprüche 1 bis 4, wobei die Dicke der Verbundfolie 100 bis 1000 µm beträgt.

6. Verwendung nach einem der Ansprüche 1 bis 5, wobei auf einer oder beiden Seiten von mindestens einer Barriereschicht mindestens eine wasserabweisende Schicht aufgebracht ist.

7. Verwendung nach einem der Ansprüche 1 bis 6, wobei die Verbundfolie, gemäß Bestimmungsmethode ASTM D3985, DIN 53380/3 eine maximale Gasdurchlässigkeit für Sauerstoff von weniger als 0,5 cm³/(m² x d x bar) bei 23°C und 50% relativer Luftfeuchtigkeit aufweist.

8. Verfahren zur Verpackung von oxidationsempfindlichen Polymeren, die (i) Homo- und Copolymere von N-Vinylverbindungen, wasserlösliche und wasserunlöslich vernetzte Homo- und Copolymere von Vinylpyrrolidon, Vinylpyrrolidon-Vinylacetat-Copolymere, Vinylacetat-enthaltende Polyether-Pfropfpolymere, Polyamide oder Polyether, (ii) Mischungen von zwei oder mehreren dieser Polymeren oder (iii) Mischungen enthaltend eines oder mehrere dieser Polymere sind, umfassend das Einbringen von Füllgut, welches aus oxidationsempfindlichen Polymeren und gegebenenfalls Schutzgas besteht, in eine Verpackungsform, die unter Verwendung einer Verbundfolie gemäß einem der Ansprüche 1 bis 7 hergestellt wurde.

9. Verpackungsform enthaltend Füllgut (Gebinde), wobei die Verpackungsform unter Verwendung von Verbundfolie gemäß einem der Ansprüche 1 bis 7 hergestellt wurde und das Füllgut aus oxidationsempfindlichen Polymeren, die (i) Homo- und Copolymere von N-Vinylverbindungen, wasserlösliche und wasserunlöslich vernetzte Homo- und Copolymere von Vinylpyrrolidon, Vinylpyrrolidon-Vinylacetat-Copolymere, Vinylacetat-enthaltende Polyether-Pfropfpolymere, Polyamide oder Polyether, (ii) Mischungen von zwei oder mehreren dieser Polymeren oder (iii) Mischungen enthaltend eines oder mehrere dieser Polymere sind, und gegebenenfalls Schutzgas besteht.

10. Gebinde nach Anspruch 9, wobei die Verpackungsform ein Seitenfaltensack oder ein Flachsack ist.

11. Gebinde nach einem der Ansprüche 9 oder 10, wobei das Gasvolumen im Gebinde einen Sauerstoffgehalt von weniger als 13 Volumenprozent aufweist.

12. Gebinde nach einem der Ansprüche 9 bis 11, wobei das Füllgut in Form eines Pulvers vorliegt.

13. Umverpackung, enthaltend Gebinde nach einem der Ansprüche 9 bis 12.

14. Umverpackung nach Anspruch 13, wobei die Umverpackung ein Fass oder Karton ist.

## Claims

1. The use of composite foils, comprising barrier layers based on copolymers composed of ethylene and vinyl alcohol, as packaging material for polymers which are susceptible to oxidation and which are (i) homo- and copolymers of N-vinyl compounds, or are water-soluble or water-insoluble crosslinked homo- and copolymers of vinylpyrrolidone, or are vinylpyrrolidone-vinyl acetate copolymers, vinylacetate-comprising polyether graft polymers, polyamides, or polyethers, (ii) a mixture of two or more of said polymers, or (iii) a mixture comprising one or more of said polymers, where the composite foils and the types of packaging produced therefrom comprising contents have at least three layers, where at least one backing layer and at least one barrier layer are provided, and where the contents are composed of polymers which are susceptible to oxidation and optionally of inert gas.

2. The use according to claim 1, where the composite foils comprise backing layers composed of polyesters, of polyamide, of polyvinyl chloride, of cellophane, or of polyolefins.

3. The use according to claims 1 and 2, where the composite foils comprise adhesive layers.

4. The use according to any of claims 1 to 3, where the composite foils comprise adhesive layers based on maleic-acid- or maleic-anhydride-modified ethylene-vinyl acetate copolymers.

5. The use according to any of claims 1 to 4, where the thickness of the composite foil is from 100 to 1000 µm.

6. The use according to any of claims 1 to 5, where at least one water-repellant layer has been applied on one or both sides of at least one barrier layer.

7. The use according to any of claims 1 to 6, where, according to determination methods ASTM D3985 and DIN 53380/3, the maximum gas permeability of the composite foil with respect to oxygen is less than 0.5 cm³/(m² × d × bar) at 23°C and 50% relative humidity.

8. A process for packaging polymers which are susceptible to oxidation and which are (i) homo- and copolymers of N-vinyl compounds, or which are water-soluble or water-insoluble crosslinked homo- and copolymers of vinylpyrrolidone, or which are vinylpyrrolidone-vinyl acetate copolymers, vinylacetate-comprising polyether graft polymers, polyamides, or polyethers, (ii) a mixture of two or more of said polymers, or (iii) a mixture comprising one or more of said polymers, which process comprises the introduction of contents which are composed of polymers which are susceptible to oxidation and optionally of inert gas into packaging which has been produced with use of a composite foil according to any of claims 1 to 7.

9. A type of packaging comprising contents (pack), where the packaging has been produced with use of composite foil according to any of claims 1 to 7 and the contents are composed of polymers which are susceptible to oxidation and which are (i) homo- and copolymers of N-vinyl compounds, or are water-soluble or water-insoluble crosslinked homo- and copolymers of vinylpyrrolidone, or are vinylpyrrolidone-vinyl acetate copolymers, vinylacetate-comprising polyether graft polymers, polyamides, or polyethers, (ii) a mixture of two or more of said polymers, or (iii) a mixture comprising one or more of said polymers, and optionally of inert gas.

10. The pack according to claim 9, where the packaging is a side-gusset bag or a flat bag.

11. The pack according to claim 9 or 10, where the oxygen content of the gas volume in the pack is less than 13 percent by volume.

12. The pack according to any of claims 9 to 11, where the contents take the form of a powder.

13. A type of outer packaging comprising a pack according to any of claims 9 to 12.

14. The type of outer packaging according to claim 13, which is a drum or carton.

## Revendications

1. Utilisation de feuilles composites, contenant des couches formant une barrière à base de copolymères d'éthylène et d'alcool vinylique, comme matériau d'emballage pour des polymères sensibles à l'oxydation qui sont (i) des homopolymères et des copolymères de composés N-vinyliques, des homopolymères et des copolymères solubles et insolubles dans l'eau, réticulés, de vinylpyrrolidone, des copolymères de vinylpyrrolidone-acétate de vinyle, des polymères greffés de polyéther contenant de l'acétate de vinyle, des polyamides ou des polyéthers, (ii) des mélanges de deux de ces polymères ou plus ou (iii) des mélanges contenant un ou plusieurs de ces polymères, les feuilles composites et les formes d'emballage fabriquées à partir de celles-ci, contenant une masse de remplissage, présentant au moins trois couches, parmi lesquelles on trouve au moins une couche support et au moins une couche formant une barrière et la masse de remplissage étant constituée de polymères sensibles à l'oxydation et le cas échéant d'un gaz de protection.

2. Utilisation selon la revendication 1, les feuilles composites contenant des couches support en polyesters, en polyamide, en poly(chlorure de vinyle), en cellophane ou en polyoléfines.

3. Utilisation selon la revendication 1 et 2, les feuilles composites contenant des couches adhésives.

4. Utilisation selon l'une quelconque des revendications 1 à 3, les feuilles composites contenant des couches adhésives à base de copolymères d'éthylène-acétate de vinyle modifiés par de l'acide maléique ou de l'anhydride d'acide maléique.

5. Utilisation selon l'une quelconque des revendications 1 à 4, l'épaisseur de la feuille composite étant de 100 à 1000 µm.

6. Utilisation selon l'une quelconque des revendications 1 à 5, au moins une couche hydrofugée étant appliquée sur une ou sur les deux faces d'au moins une couche formant une barrière.

7. Utilisation selon l'une quelconque des revendications 1 à 6, la feuille composite présentant, selon le procédé de détermination ASTM D3985, DIN 53380/3, une perméabilité maximale au gaz, pour l'oxygène, inférieure à 0,5 cm³/(m² x d x bar) à 23°C et à une humidité relative de 50%.

8. Procédé pour l'emballage de polymères sensibles à l'oxydation qui sont (i) des homopolymères et des copolymères de composés N-vinyliques, des homopolymères et des copolymères solubles et insolubles dans l'eau, réticulés, de vinylpyrrolidone, des copolymères de vinylpyrrolidone-acétate de vinyle, des polymères greffés de polyéther contenant de l'acétate de vinyle, des polyamides ou des polyéthers, (ii) des mélanges de deux de ces polymères ou plus ou (iii) des mélanges contenant un ou plusieurs de ces polymères, comprenant l'introduction de la masse de remplissage, qui est constituée de polymères sensibles à l'oxydation et le cas échéant de gaz de protection, dans une forme d'emballage qui a été fabriquée avec utilisation d'une feuille composite selon l'une quelconque des revendications 1 à 7.

9. Forme d'emballage contenant une masse de remplissage (unité d'emballage), la forme d'emballage ayant été fabriquée avec utilisation d'une feuille composite selon l'une quelconque des revendications 1 à 7 et la masse de remplissage étant constituée par des polymères sensibles à l'oxydation qui sont (i) des homopolymères et des copolymères de composés N-vinyliques, des homopolymères et des copolymères solubles et insolubles dans l'eau, réticulés, de vinylpyrrolidone, des copolymères de vinylpyrrolidone-acétate de vinyle, des polymères greffés de polyéther contenant de l'acétate de vinyle, des polyamides ou des polyéthers, (ii) des mélanges de deux de ces polymères ou plus ou (iii) des mélanges contenant un ou plusieurs de ces polymères, et le cas échéant par un gaz de protection.

10. Unité d'emballage selon la revendication 9, la forme d'emballage étant un sac à plis latéraux ou un sac plat.

11. Unité d'emballage selon l'une quelconque des revendications 9 ou 10, le volume de gaz dans l'unité d'emballage présentant une teneur en oxygène inférieure à 13% en volume.

12. Unité d'emballage selon l'une quelconque des revendications 9 à 11, la masse de remplissage se trouvant sous forme d'une poudre.

13. Suremballage, contenant des unités d'emballage selon l'une quelconque des revendications 9 à 12.

14. Suremballage selon la revendication 13, le suremballage étant un fût ou un carton.
